# EUROPEAN PATENT APPLICATION

(11) **EP 0 717 544 A2**
(43) Date of publication of application: **19.06.1996**
(21) Application number: 95308694.9
(22) Date of filing: 01.12.1995
(51) Int. Cl.: H04M 3/56, H04L 12/18, G06F 3/023

(54) **Graphical user interface for multimedia conferencing system**

(30) Priority: 16.12.1994 US 357809
(71) Applicant: AT&T Corp., New York, NY 10013-2412 (US)
(72) Inventor: Altom, Mark W., Plainfield, New Jersey 07060 (US); Quarles, Diane L., Wall, New Jersey 07719 (US); Pastore, Richard L., Brick, New Jersey 08723 (US); Ruiz, Dirk, Highland Park, New Jersey 08904 (US)
(74) Representative: Johnston, Kenneth Graham

(57) **Abstract**

A graphical user interface for distributing and/or sharing information to and with virtual meeting participants is disclosed that employs realistic metaphors of real life face-to-face meetings. This is realized by taking advantage of prospective meeting participants' already existing knowledge of how real life face-to-face meetings operate. To this end, the graphical user interface, i.e., multimedia communications application program, enables the meeting participants through direct manipulation of the realistic graphical metaphors to perform actions in distributing and/or sharing information that they would perform in a real life face-to-face meeting from a location remote from the other meeting participants.

## Description

### Technical Field

This invention relates to telecommunications networks and, more particularly, to an endpoint graphical user interface for multimedia communications that provides flexible multimedia telephone service and the like including video, voice and/or data.

### Background Of the Invention

The essential characteristics of face-to-face meetings can be simulated by multimedia telecommunications conferencing systems. Such conferencing systems permit separated meeting participants to communicate with one another in multiple media such as video, voice and/or data from their own workplace without requiring that they convene in the same place.

In prior known multimedia conferencing systems, it has been required that the individual meeting participants had to be conversant with sophisticated video and data communications protocols in order to establish and operate a virtual meeting and, especially, in distributing and/or sharing information with other participants. If a prospective participant was not familiar with the video and/or data protocols, it essentially precluded his or her participation in the full virtual meeting. Those prospective participants would be limited to only the audio portion of the meeting. This of course is extremely undesirable. Therefore, a problem exists in providing an easy natural real life way for unsophisticated prospective meeting participants to participate fully in a virtual meeting from their workstation.

### Summary of the Invention

The problems and limitations with prior multimedia telecommunications conferencing systems are overcome by utilizing a graphical user interface (multimedia communications application program) that employs realistic metaphors of real life face-to-face meetings in order to easily distribute and/or share information with other meeting participants. This is realized by taking advantage of prospective meeting participants' already existing knowledge of how real life face-to-face meetings operate. To this end, the graphical user interface, i.e., multimedia communications application program, enables the meeting participants through direct manipulation of realistic graphical icons of objects to perform actions in distributing and/or sharing of information from a location remote from the other meeting participants that they would perform in a real life face-to-face meeting utilizing the real life objects. The actions performed in manipulating the realistic icons essentially mimics the actions performed in a face-to-face real life meeting.

### Brief Description of Drawing

FIG. 1 is an example of a multimedia telecommunications system in which the invention may be employed;
FIG. 2 shows, in simplified block diagram form, the relationships between the multimedia communications application program (hereinafter multimedia application), middleware and the communications network;
FIG. 3 shows, in simplified block diagram form, details of a workstation which may be employed in practicing the invention;
FIG. 4 is a graphical screen representation of the realistic graphical meeting room metaphor;
FIG. 5 is a graphical screen representation with the multimedia application minimized;
FIG. 6 is a flow chart illustrating the steps a user performs in starting the multimedia application in the initiation of a multimedia telephone call;
FIG. 7 is a graphical screen representation which is displayed upon a user starting the multimedia application in the initiation of the multimedia telephone call;
FIG. 8 is a flow chart illustrating the steps that the user would perform in selecting a telephone to initiate a multimedia call;
FIG. 9 is a graphical screen representation of the call bar that appears when the telephone is selected to initiate the multimedia call;
FIG. 10 is a flow chart illustrating the steps in placing a multimedia call from a directory;
FIG. 11 is a graphical screen representation of a directory;
FIG. 12 is a graphical screen representation of a multimedia call initiated from an entry in the directory;
FIG. 13 is a flow chart illustrating the steps taken in effecting a multimedia call directly from the call bar;
FIG. 14 is a graphical screen representation illustrating a phone number being entered directly from the keyboard of the user workstation;
FIG. 15 is a graphical screen representation illustrating ringing at a remote participant's phone number that is being displayed;
FIG. 16 is a flow chart illustrating the steps taken in effecting a multimedia call from a dial pad;
FIG. 17 is a graphical screen representation illustrating the appearance of the dial pad below the call bar;
FIG. 18 is a graphical screen representation illustrating a phone number entered from the dial pad;
FIG. 19 is a graphical screen representation illustrating ringing at a remote participant's phone number that is being displayed;
FIG. 20 is a flow chart illustrating the steps taken once the call is placed;
FIG. 21 is a graphical screen representation illustrating the meeting upon a remote participant answering the call;
FIG. 22 is a flow chart illustrating the steps which are taken upon receipt of an incoming call at a user workstation;
FIG. 23 is a graphical screen representation illustrating the name and phone number of the calling party;
FIG. 24 is a graphical screen representation illustrating the meeting room upon the called party answering the incoming call;
FIG. 25 is a flow chart illustrating the general steps of sharing information among all participants of the meeting;
FIG. 26 is a graphical screen representation of an ongoing meeting with several participants at their workstations;
FIG. 27 is a flow chart illustrating the steps taken in sharing a file among all participants of the meeting;
FIG. 28 is a graphical screen representation illustrating the files that are available to be selected for sharing;
FIG. 29 is a graphical screen representation illustrating a file being selected to be shared;
FIG. 30 is a graphical screen representation illustrating the selected file being dragged to the meeting table;
FIG. 31 is a graphical screen representation illustrating the selected file placed on the meeting table;
FIG. 32 is a flow chart illustrating the steps taken in sharing an application program among all participants of the meeting;
FIG. 33 is a graphical screen representation illustrating the application programs that are available to be selected from for sharing;
FIG. 34 is a graphical screen representation illustrating the selection of an application program to be shared;
FIG. 35 is a graphical screen representation illustrating the selected application program being dragged to the meeting table;
FIG. 36 is a graphical screen representation illustrating the selected application program placed on a meeting table;
FIG. 37 is a graphical screen representation illustrating the selected application program being shared among participants of the meeting;
FIG. 38 is a flow chart illustrating the general steps taken in sharing information with a selected subset of the participants of the meeting;
FIG. 39 is a flow chart illustrating the steps in sharing a file with a selected subset of the participants of the meeting;
FIG. 40 is a graphical screen representation illustrating two participants of the meeting in a subset;
FIG. 41 is a graphical screen representation illustrating a file being dragged to a desired participant of the subset;
FIG. 42 is a flow chart illustrating the steps taken in sharing an application program with a selected subset of the participants of the meeting;
FIG. 43 is a graphical screen representation illustrating an application program being dragged to a desired participant of the subset;
FIG. 44 is a flow chart illustrating the general steps taken in sharing an image among the participants of the meeting;
FIG. 45 is a flow chart illustrating the steps taken in sharing an image with all participants of the meeting;
FIG. 46 is a graphical screen representation illustrating the projector being dragged from the tool closet to the meeting table;
FIG. 47 is a graphical screen representation illustrating a user selecting an image file;
FIG. 48 is a graphical screen representation illustrating a user dragging an image file to the projector;
FIG. 49 is a graphical screen representation illustrating an image file on the projector being shared among all participants of the meeting;
FIG. 50 is a graphical screen representation illustrating a blank screen being projected;
FIG. 51 is a flow chart illustrating the steps taken in sharing an image with a subset of the participants of the meeting;
FIG. 52 is a graphical screen representation illustrating dragging of the projector to a desired participant of the subset;
FIG. 53 is a graphical screen representation illustrating a blank screen being projected to participants in the subset;
FIG. 54 is a graphical screen representation illustrating a user in the subset selecting an image file;
FIG. 55 is a graphical screen representation illustrating a user in the subset dragging an image file to the projector; and
FIG. 56 is a graphical screen representation illustrating an image file on the projector being shared by the participants in the subset.

### Detailed Description

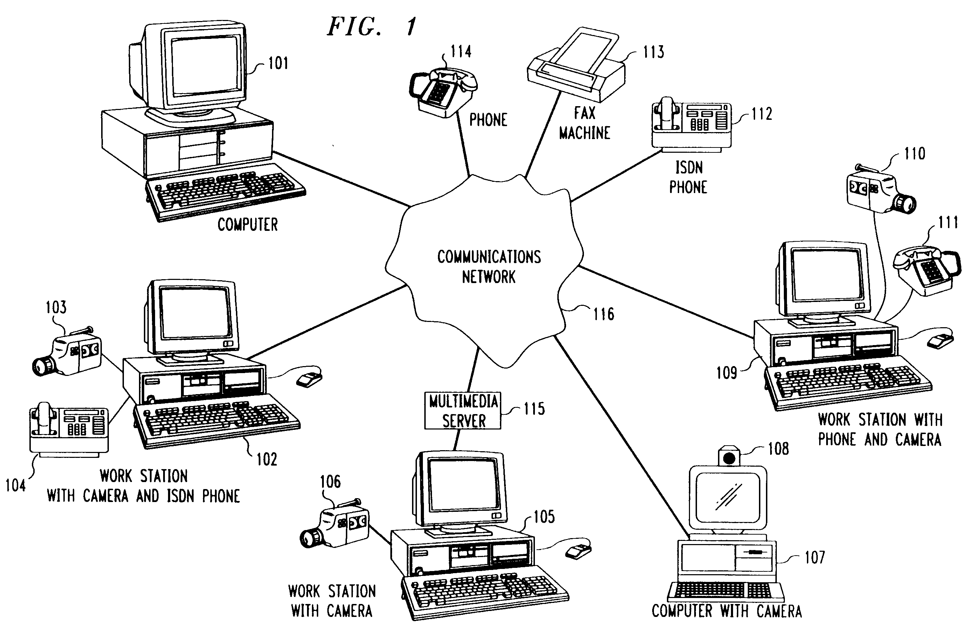

FIG. 1 shows an example of multimedia telecommunications system 100 in which an embodiment of the invention may be readily employed. Individual users at different work locations can set up a multimedia conference call via a number of different desktop communications devices. As shown, the desktop communications devices may include, but are not limited to, personal computer 101 with built in microphone for audio, workstation 102 including an attached video camera 103 and ISDN telephone 104, workstation 105 with attached video camera 106, personal computer 107 with an integrated video camera 108, workstation 109 including video camera 110 and an analog telephone 111, ISDN telephone 112, facsimile (FAX) machine 113 and, finally, analog telephone 114. It should be noted that personal computer 101 does not provide local user video to the meeting, FAX machine 113 only provides FAX service and ISDN telephone 112 and analog telephone 114 only provide audio access to the meeting. The personal computers and workstations may be any of those known in the art, for example, personal computers and/or workstations commercially available from AT&T Corp., Apple Computer Inc., Sun Microsystems Inc. and others.

The several different desktop communications devices are interconnected via communications network 116. Note that workstations 101, 102, 107 and 109, and ISDN telephone 112, facsimile machine 113, and analog telephone 114 are directly connected to communications network 116, while workstation 105 is connected through multimedia server 115 to communications network 116. In this example, communications network 116 could be, for example, a long distance telecommunications network such as a long distance network provided by AT&T. It may be connected to a number of local telephone networks provided by local exchange carriers or alternate access vendors to provide access to the different desktop communications devices. Alternatively, communications network 116 could be a wide band area network, a local area network or the like. Typically, communications network 116 may include the usual public switched long distance network composed of a plurality of well known digital switching units and may contain one or more packet networks. Additionally, communications network 116 may include known video conference bridge arrangements capable of conferencing video, audio and/or data bit streams among the different desktop communication devices. Communications network 116 may also include multimedia multipoint control units (MCUs) that provide multimedia call capability including video, audio and/or data bit streams. Such MCU units are known and are described in Bell Core Generic Requirements GR-1337-CORE, Issue 1, September 1993 and entitled "Multipoint Multimedia Conferencing Control Unit". Furthermore, communications network 116 may include an asynchronous transport mode (ATM) network capable of transporting and switching multimedia calls including video, audio, and/or data bit streams.

As indicated above, workstation 105 is connected via multimedia server 115 to communications network 116. Multimedia server 115 provides for one or more video, one or more audio and one or more data bit streams to be combined, while maintaining the integrity of those bit streams for transmission to communications network 116, for workstation 105 and the other desktop communications devices in a particular meeting including workstation 105. The functionality of multimedia server 115 can be provided for a particular workstation locally, as shown in relationship to workstation 105, and for the other desktop communications devices in a meeting including workstation 105. It is noted that for the other desktop communications devices in a meeting not including workstation 105 and multimedia server 115, communications network 116 must provide the multimedia server functionality for them. Thus, communications network 116, which is not part of this invention, provides the functionality including the multimedia server functionality, when necessary, for interconnecting selected ones of the desktop communications devices in particular virtual meetings, as desired.

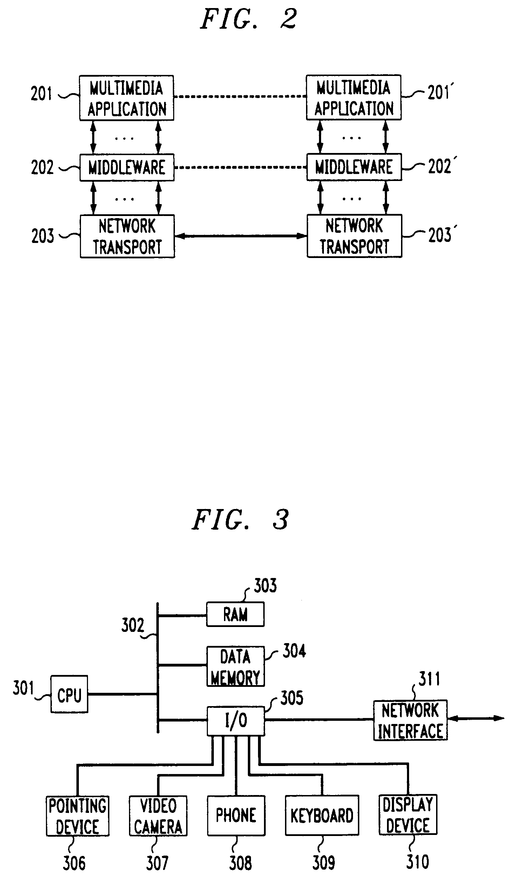

FIG. 2 illustrates in simplified block diagram form how multimedia application, i.e., the graphical user interface, 201 (201 ') located on the user personal computer or workstation communicates via application program interfaces that connect to middleware 202 (202'). Note that the solid lines in FIG. 2 denote direct connectivity between elements 201 through 203 and 203' through 201 ', and vice versa, while the dotted lines denote logical connectivity between, for example, elements 201 and 201', and 202 and 202'. Middleware 202 (202') is software that is located at the workstation and also distributed among intelligent points in communications network 116. Middleware 202 (202') serves to isolate the multimedia application from platform differences (e.g., UNIX versus MS-DOS and the like) and communications network 116 details. Middleware 202 (202') also serves as a link between the workstation application programs, for example 201, and network transport 203 server functions, as well as, applications that include, but are not limited to multimedia call connection setup, directory services of people and network resources, information services, messaging services, and the like. When a user places or receives a multimedia call from his or her workstation, the workstation automatically registers its capabilities with middleware 202 (202'). Middleware 202 (202') employs the registered capabilities to control call setup and transmission of video, audio and/or data. Since, all the capabilities (e.g., full-video, shared data, facsimile, audio and the like) from all of the meeting participants workstations are registered with middleware 202 (202'), it is available to all of the meeting participants. When information is to be transmitted to participants in the multimedia meeting, middleware 202 (202') determines the proper display formats and transport protocols. Such middleware is known in the art, see for example, an article entitled "Middleware's Next Step: Enterprise-Wide Applications", Data Communications. Sept. 1992, pages 157-164 and an article entitled "Closeup Middleware: Networking's Silly Putty", Communications Week, June 20, 1994, pages 48-49.

FIG. 3 shows, in simplified block diagram form, details of a user's workstation. Specifically, shown is central processing unit (CPU) 301 which is interconnected via bus 302 to random access memory (RAM) 303, data memory 304, which may be a ROM, and input/output (I/O) unit 305. I/O 305 interfaces pointing device 306, video camera 307, if available, telephone 308, analog or ISDN if available, keyboard 309, and display device 310 to bus 302 and to network interface 311. Such workstations units are known in the art and commercially available, as indicated above, and provide shared data capabilities. Network interface 311 comprises an application program interface that translates computer application requests into the appropriate transport format for transmission via communications network 116 and also takes requests from communications network 116 and translates them into a format appropriate for interacting with the workstation's applications program. Such arrangements are known in the art. It is further noted that transmission from a user workstation to communications network 116 may be via any of a number of transmission arrangements for example, digital data system (DDS), basic rate interface (BRI) ISDN, primary rate interface (PRI) ISDN, a modem, analog transmission, digital transmission, facsimile transmission, or the like. It is noted that a mouse, track ball, touch screen, keyboard cursor control keys or the like may be employed as a pointing device.

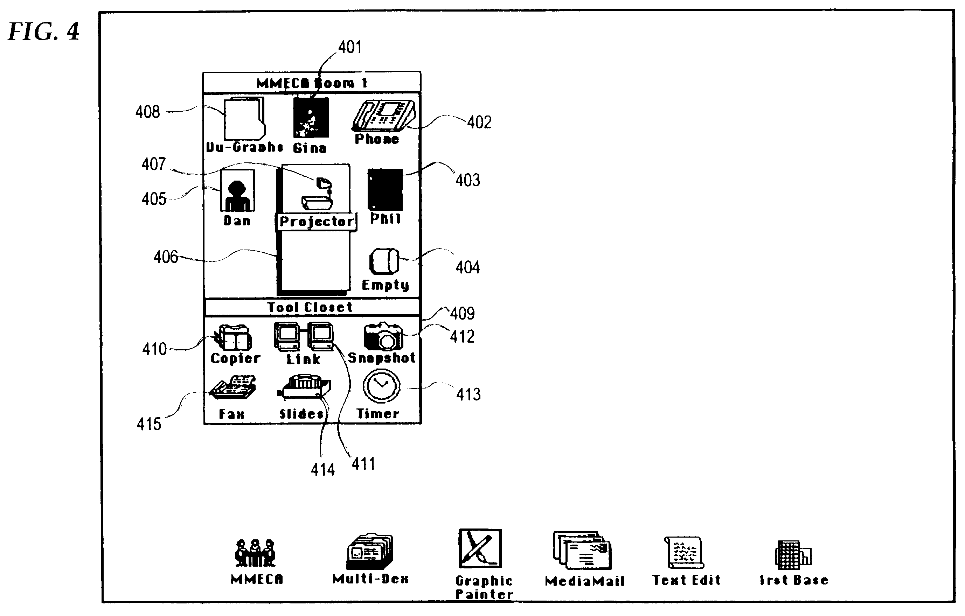

FIG. 4 is a graphical screen representation of the real life meeting room metaphor illustrating the various components that could be included in a multimedia meeting. Shown in FIG. 4 is image icon 401, illustrating the image of the originator of the meeting, realistic telephone 402 which is used to place and receive multimedia calls, image icon 403 of a participant in the meeting, empty chair 404 which is available for an additional participant to be included in the meeting, generic image icon 405 which would be employed for a participant whose bit map image is not available, table 406 on which objects can be placed to be shared among the meeting participants, projector 407 which is shown on table 406 and may be utilized to share images among the participants, and view graph folder 408 which contains images that can be placed on the projector 407. Also, shown in FIG. 4 is tool closet 409, which includes additional multimedia tools that may be utilized during a multimedia meeting by the participants. Shown in tool closet 409, in this example, are copier 410 which may be utilized by the participants to send computer files from one participant to one or more of the other participants, application sharer (link) 411 which enables the participants to share a computer application program, screen snapshot camera 412 which is used to create a view graph by taking a snapshot of any portion of the monitor screen, call timer 413 which times the length of the multimedia call and can be used to set an alarm, slide projector 414 which is used to display a presentation of a sequence of one or more images to the meeting participants, and FAX machine 415 which is used to send facsimiles to meeting participants and others. The instrumentalities shown in tool closet 409 are by way of example and any other desired multimedia tools may also be included. It is noted that tool closet 409 may be closed to save screen space on the user's workstation monitor screen. Note that the icons are of realistic real life objects that are or should be well known to the meeting participants. Since, all of the objects are well known as to their nature and use, the meeting participants do not need to know any sophisticated protocols in order to use them. Indeed, the virtual meeting participants use the realistic icons in the same manner as they would their real life counterparts. Additionally, the image icons of the meeting participants are arranged around the table in similar fashion as the participants would be seated in a real life face-to-face meeting. This allows the participants to interact with each other and use the objects in the meeting room based on their already existing knowledge. This, in turn, enhances the ease of use of the graphical user interface of this invention. Note that although projector 407 is shown on table icon 406, it equally could be in tool closet 409.

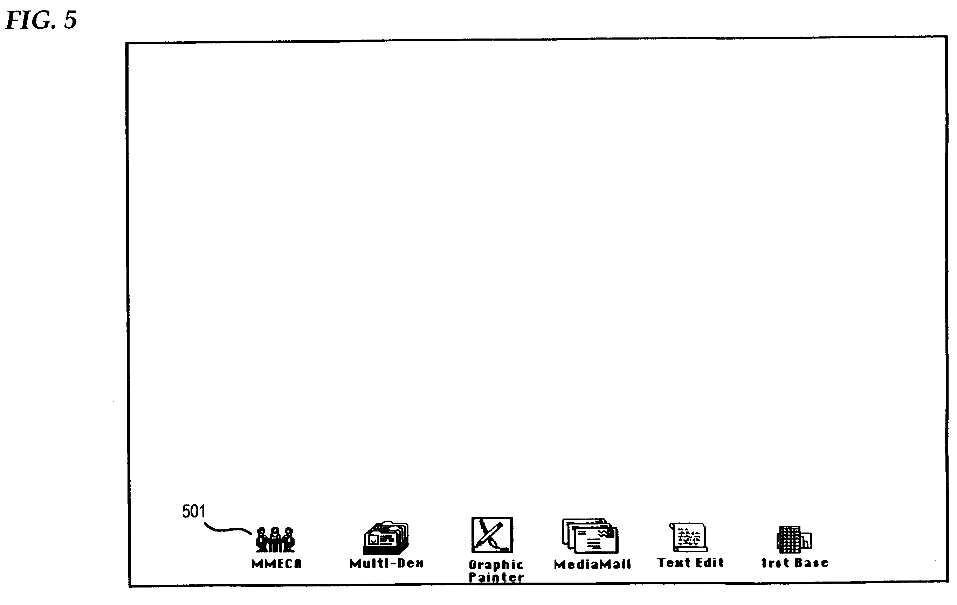

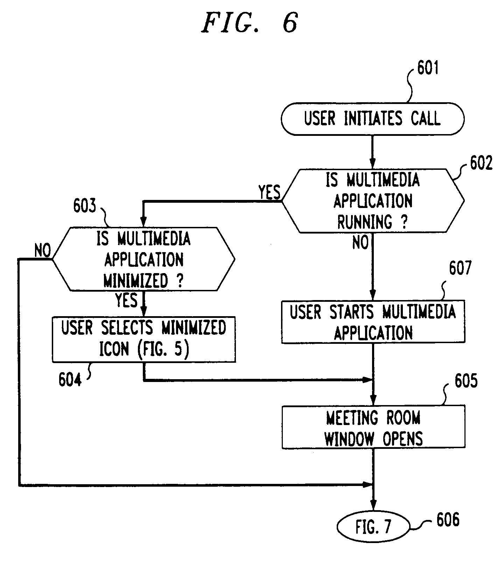

FIG. 5 is a graphical screen representation with the multimedia application (MMECA) 501 minimized. Also shown are a number of other application programs which have been minimized. Note that the multimedia application of this invention can be implemented on top of a number of known personal computer systems. Examples of such systems programs are the Vistium* personal video system commercially available from AT&T Corp. and the ProShare* personal conferencing system 200 commercially available from Intel Corporation (* note that Vistium is a trademark of AT&T Corp. and that ProShare is a trademark of Intel Corporation). In this example, it is assumed that the personal video system is included as part of the user workstation and provides the network interface 311 (FIG. 3).

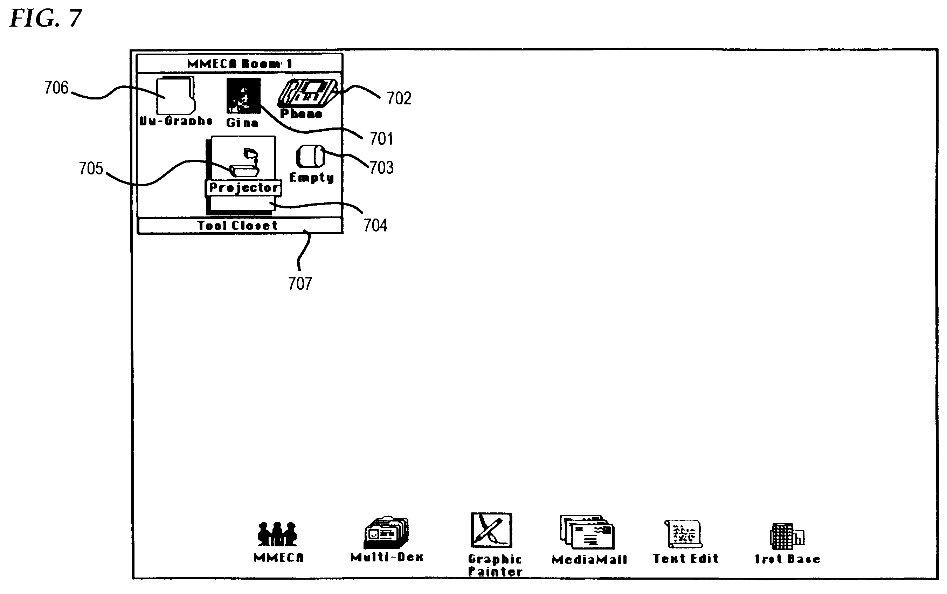

FIG. 6 is a flow chart illustrating the steps in utilizing the multimedia application for initiating a multimedia telephone call. In step 601, a user initiates a multimedia call. Then, in step 602, the user determines whether or not the multimedia application is running. If the test result in step 602 is YES, in step 603, the user determines whether the multimedia application is minimized. If the test result in step 603 is YES, the user selects the minimized multimedia application icon 501, as shown in FIG. 5. Thereafter, control is transferred to step 605 in which the meeting room window opens as shown in the screen of FIG. 7. Returning to step 603, if the test result is NO, the multimedia application is not minimized and the meeting room window is already open, as shown in the screen of FIG. 7. Returning to step 602, if the test result is NO, in step 607, the user starts the multimedia application in a manner consistent with the operating system employed in the user workstation. Thereafter, control is passed to step 605 where the meeting room window opens and is displayed, as shown in the screen of FIG. 7.

FIG. 7, as indicated above, is a graphical screen representation displayed upon a user starting the multimedia application upon initiating a multimedia call. In the example shown in FIG. 7, image icon 701 is of the multimedia call originator. Also shown is telephone 702 which may be used to originate the multimedia call, empty chair 703 which is available for an additional meeting participant to join the meeting in the multimedia call, table 704 which is used to share objects among the participants, projector 705 which is used to share images among the meeting participants, view graph folder 706 which contains the images to be shared among the meeting participants, and tool closet 707 which is closed. Again, note that the icons are of realistic real life objects which are well known to the meeting participants.

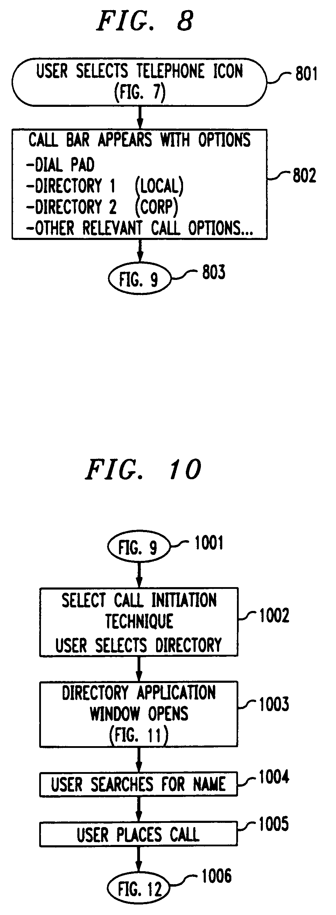

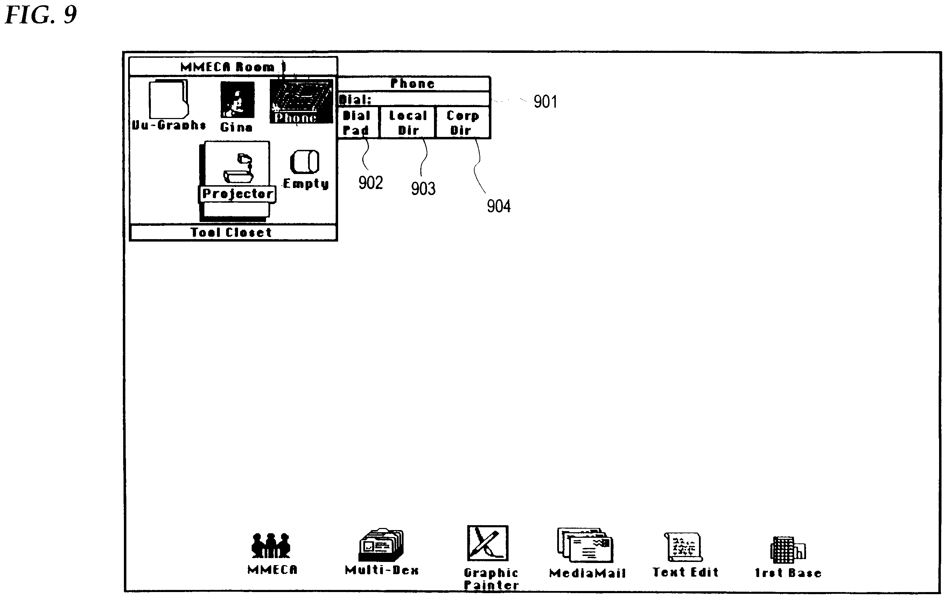

FIG. 8 is a flow chart illustrating the steps taken in the user selecting telephone 702 (FIG. 7) to initiate a multimedia call. Thus, in step 801, the user selects the realistic telephone icon 702. This causes a call bar to appear on the screen adjacent to telephone 702, as shown in the screen of FIG. 9. The call bar includes a field 901 for the user to enter a number to be called directly from the workstation keyboard, and a dial pad button 902, which when selected will display a dial pad for entering the number. Additionally, in this example, option buttons 903 and 904 are provided to select either a local on-line telephone directory or a corporate telephone directory located on the network. It should be noted that the directories associated with option buttons 903 and 904 are just examples of such directories that can be utilized for selecting the number to be called.

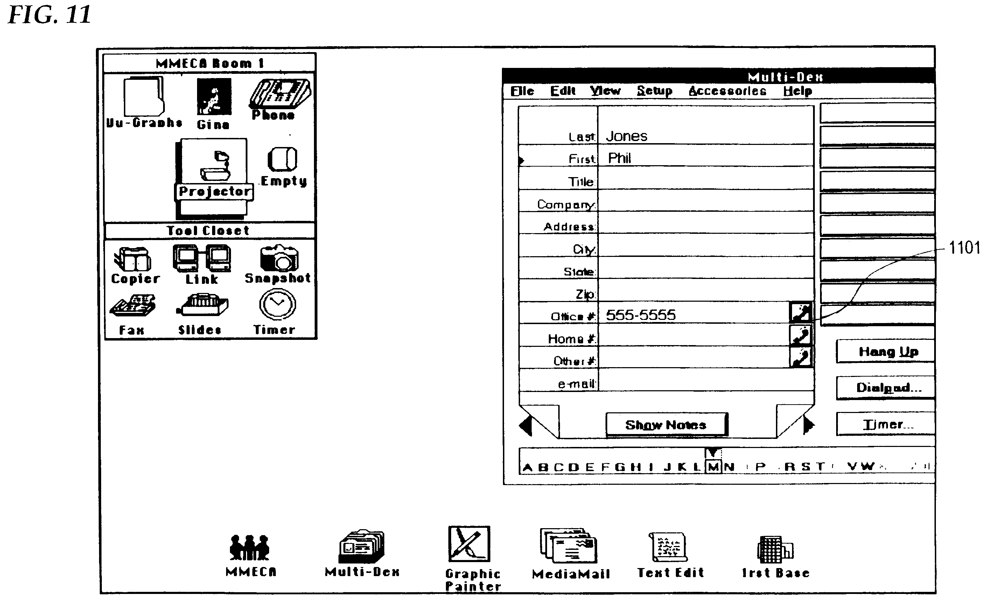

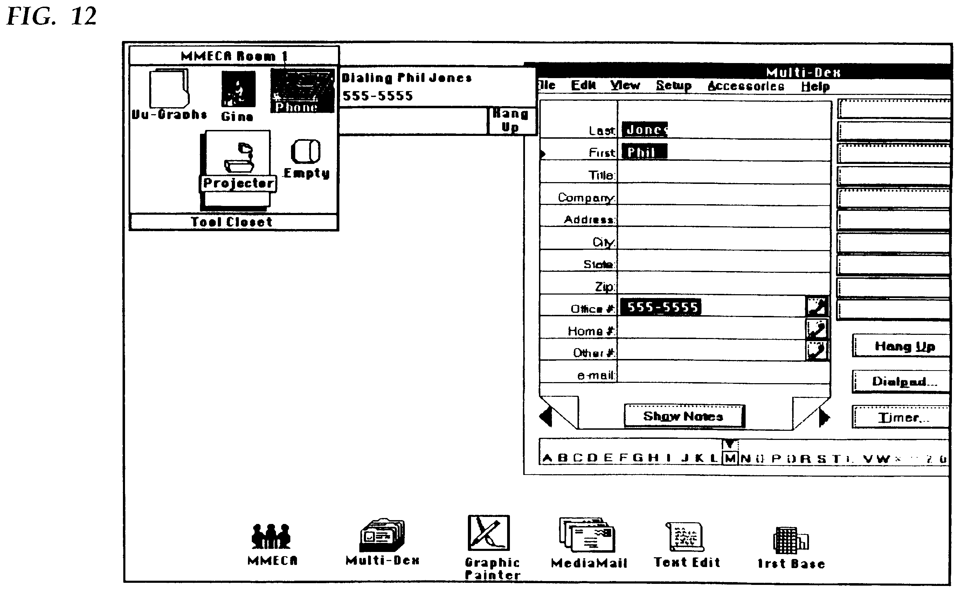

FIG. 10 is a flow chart illustrating the steps the user takes in placing a call from a multimedia directory. Thus, the process is initiated via step 1001 from the screen shown in FIG. 9. Then, in step 1002, the user selects the call initiation technique which, in this example, is the directory. This causes the directory application window to open via step 1003 and is shown in the screen of FIG. 11. The directory, shown in the window of FIG. 11, is just one example of numerous such directories that may be employed. Then, in step 1004, the user searches for the name of the desired prospective participant to be called in the multimedia call. This is realized by the user browsing through the directory. Upon the user locating the name of the desired prospective meeting participant, he or she places the multimedia call via step 1005. The call placement may be effected by any desired method, one of which is to select call button 1101, as shown adjacent to the prospective participant's telephone number in FIG. 11. The placement of the call by the user in step 1005 causes the screen as shown in FIG. 12 to be displayed via step 1006. As shown in FIG. 12, the call bar adjacent to the telephone displays the name and telephone number of the prospective meeting participant that was dialed.

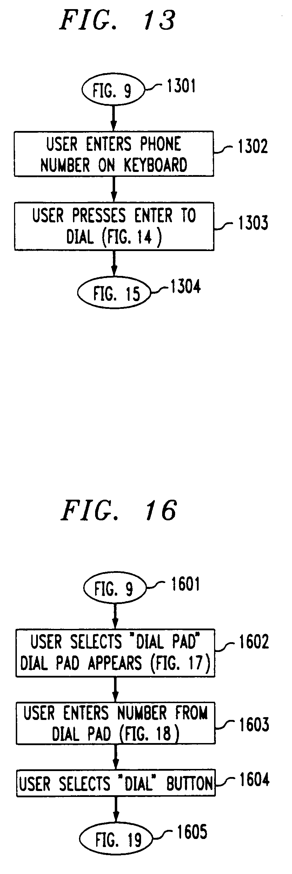

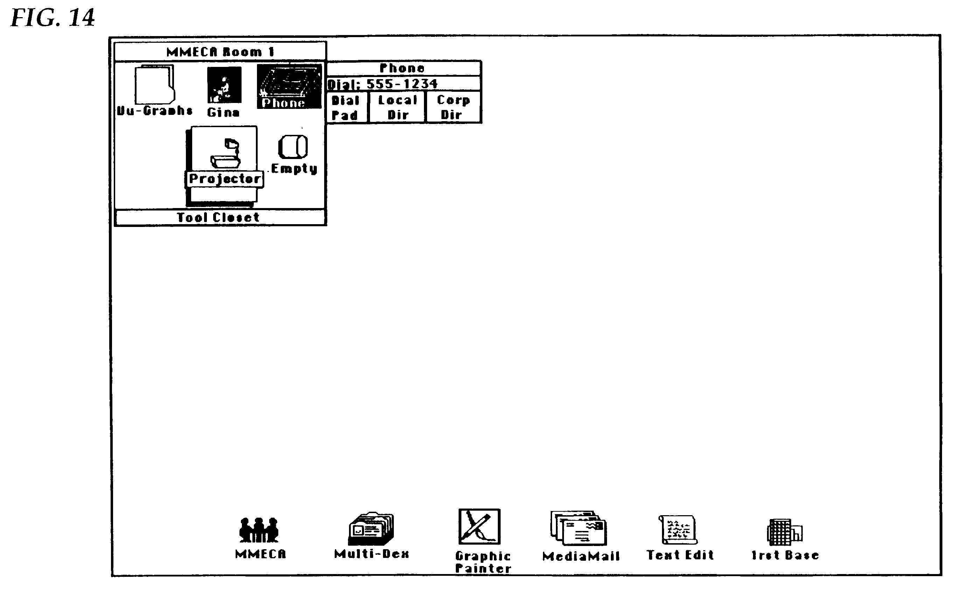

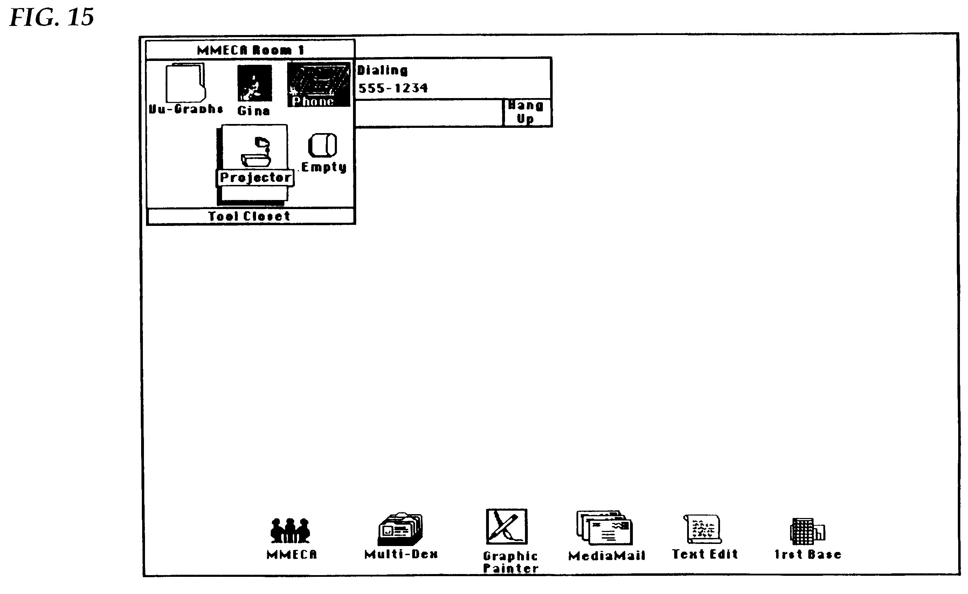

FIG. 13 is a flow chart illustrating the steps the user takes in effecting a multimedia call directly from the call bar, shown in FIG. 9. This process is initiated in step 1301 from the screen shown in FIG. 9. Then, in step 1302, the user enters the desired participant's telephone number on the local workstation keyboard. This causes the telephone number being dialed to appear in the call bar, as shown in the screen of FIG. 14. Then, in step 1303, the user, in this example, presses enter on the keyboard to cause the displayed number to be dialed, which also causes the call bar to display that the number is being dialed, as shown in the screen of FIG. 15.

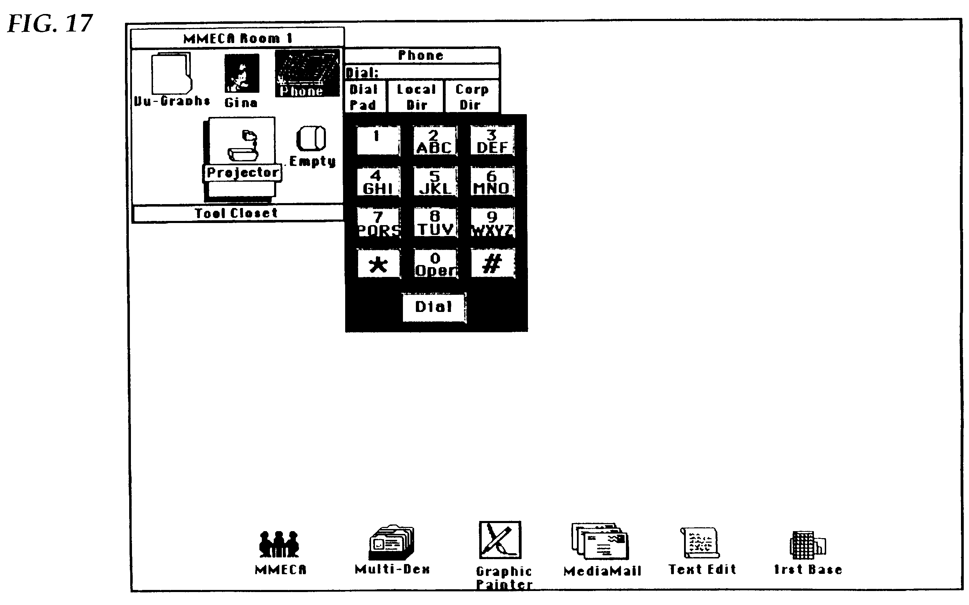

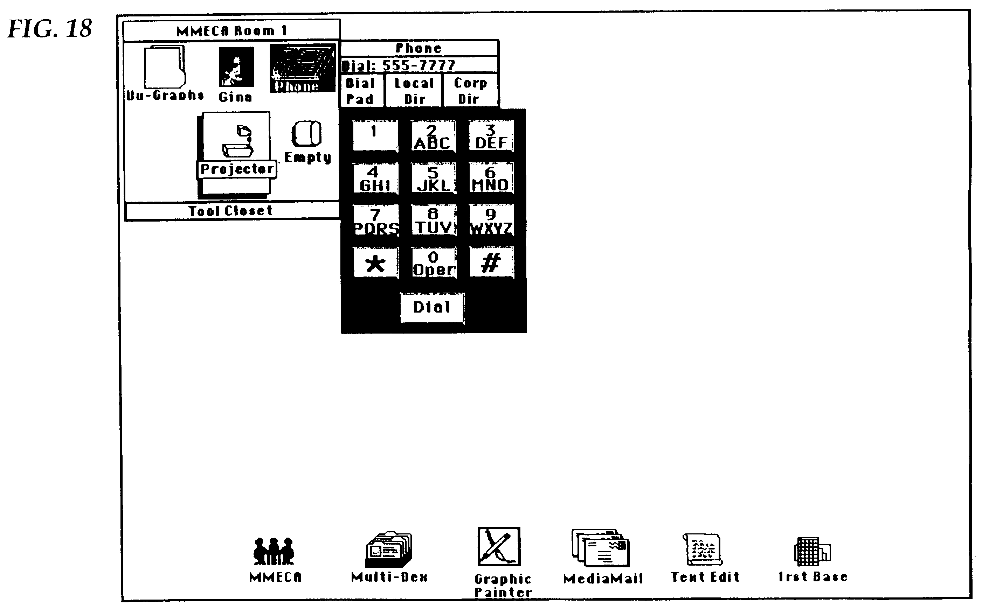

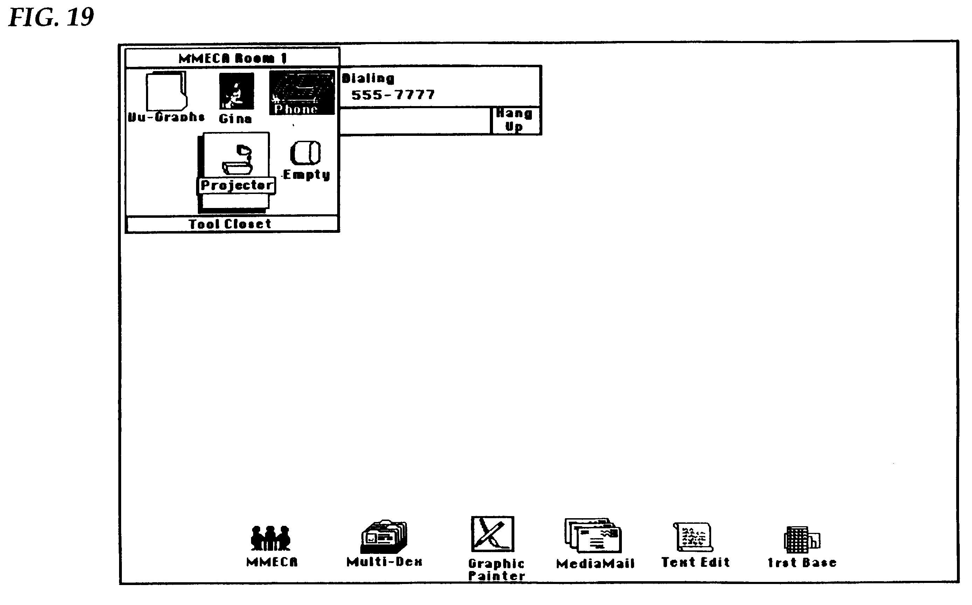

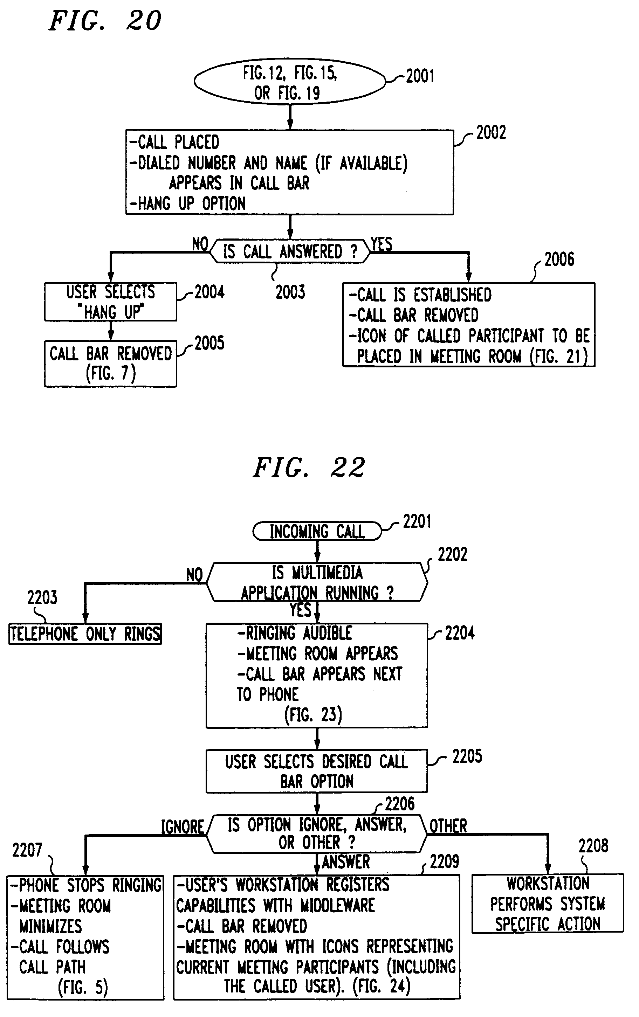

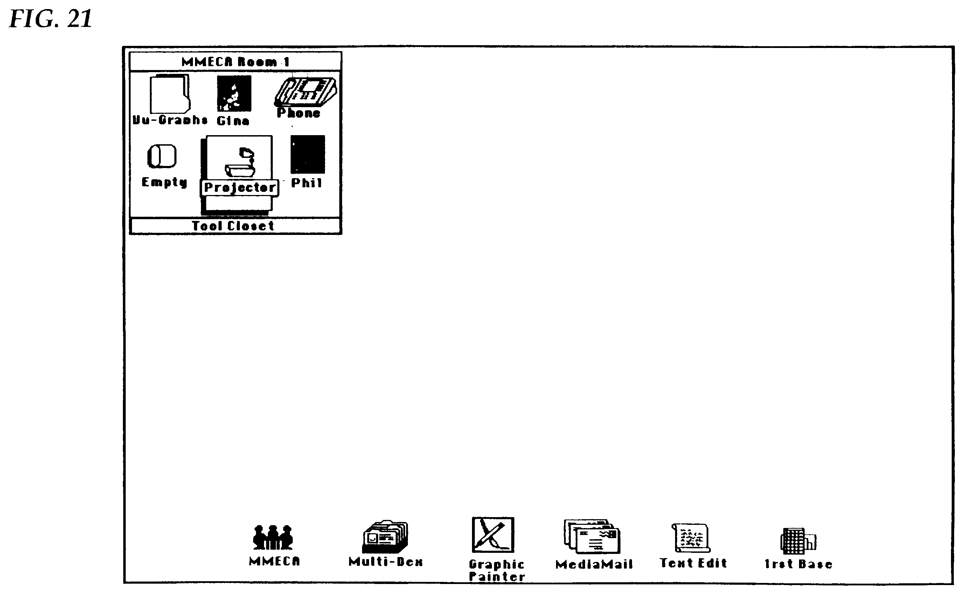

FIG. 16 is a flow chart illustrating the steps a user would take in effecting a multimedia call from the dial pad. This process is initiated in step 1601 from the screen of FIG. 9. In this instance, the user selects the dial pad option 902 from the call bar via step 1602, which causes the dial pad to appear on the screen, as shown in the screen of FIG. 17. Then, in step 1603, the user enters the desired participant's telephone number from the dial pad using a pointing device such as a mouse. This, in turn, causes the number entered to appear in the call bar, as shown in the screen of FIG. 18. Then, in step 1604, the user selects the dial button from the dial pad, which causes the telephone number to be dialed. This, causes the call bar screen to display that the number is being dialed, as shown in the screen of FIG. 19. FIG. 20 is a flow chart illustrating the steps which are taken once the multimedia call is placed, as displayed in either of the screens in FIGs. 12, 15 or 19, as initiated via step 2001. Then, as shown in either of FIGs. 12, 15 or 19, and as indicated in step 2002, the call has been placed and the dialed number and the name of the called participant, if available, appear in the call bar, as well as, a hang up option. Then, step 2003 tests to determine if the call has been answered. If the test result in step 2003 is NO, in step 2004, the user selects the hang up option from the call bar. Thereafter, the call bar is removed and the screen appears, as shown in FIG. 7. Returning to step 2003, if the test result is YES, step 2006 causes the call to begin with audio only, causes the call bar to be removed from the screen, and causes an icon of the called participant to be placed in the meeting room on a chair, as shown in the screen of FIG. 21. It is noted that if the participant's image bit map is not available the generic image icon 405 will appear instead.

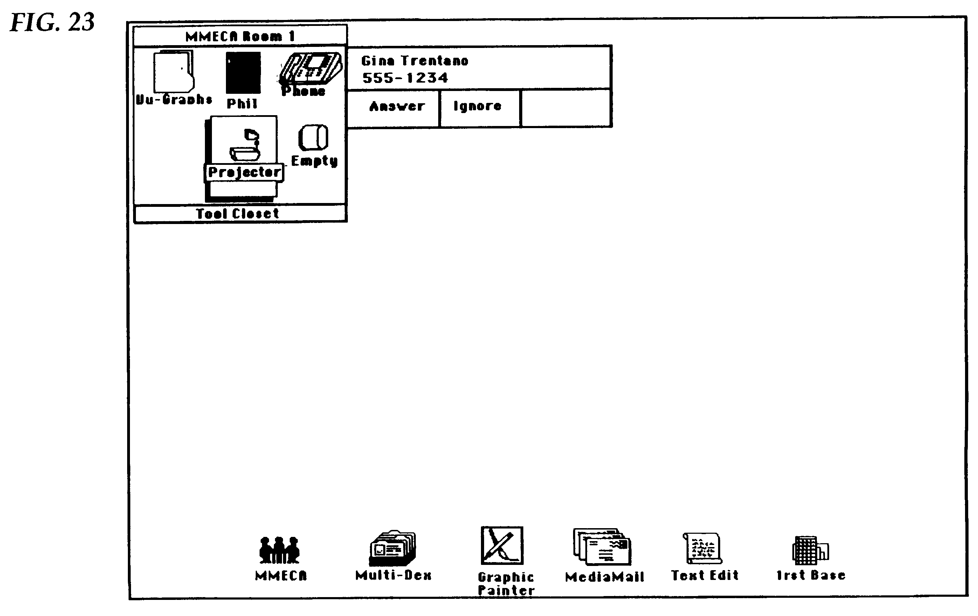

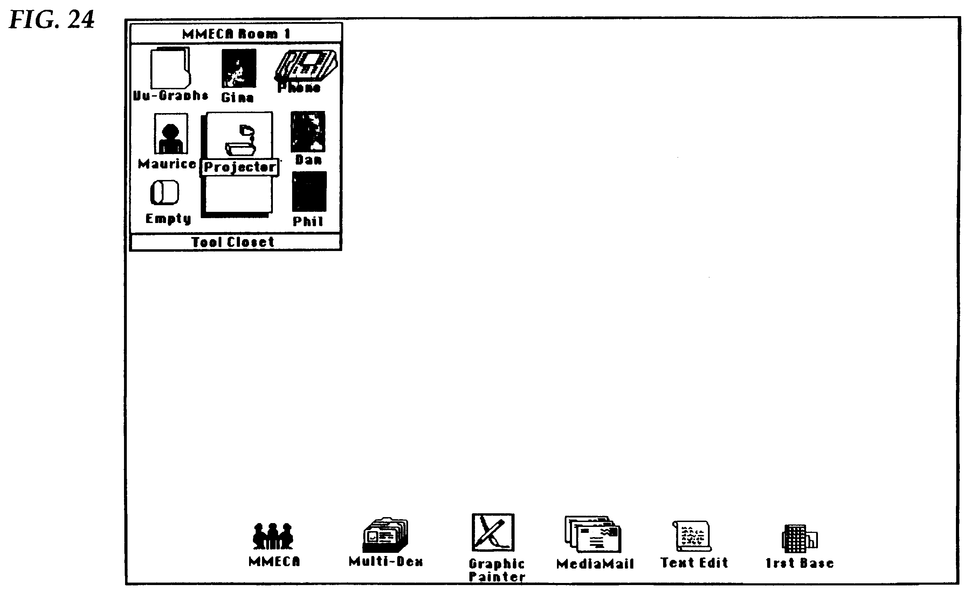

FIG. 22 is a flow chart illustrating the steps which are effected upon receipt of an incoming multimedia call at a prospective meeting participant's workstation. The process is entered with the incoming call via step 2201. Thereafter, step 2202 tests to determine if the multimedia application is running at the prospective participant's workstation. If the test result in step 2202 is NO, step 2203 causes only the telephone to ring. Then, the only option available to the called participant is to participate in the audio portion of the meeting. Returning to step 2202, if the test result is YES, step 2204 causes audible ringing to occur, the meeting room to appear on the participant's screen and the call bar to appear next to the telephone in a realistic meeting room metaphor, as shown in the screen of FIG. 23. Additionally, as shown in the screen of FIG. 23, the name and number of the calling party is displayed in the call bar. Then, in step 2205, the participant selects a desired call bar option. Thereafter, step 2206 tests to determine which option has been selected by the participant, namely, ignore, answer or other. If the test result in step 2206 indicates that the ignore option is selected, step 2207 causes the telephone to stop ringing, the realistic meeting room metaphor to be minimized and the call follows whatever call path has been setup by the network (for example, with a PBX the call could be sent to voice mail or to coverage) and the called participant's screen appears as shown in FIG. 5. Returning to step 2206, if the called participant selects other, step 2208 causes the called participant's workstation to perform any system specific action that the participant desires, such as voice mail or the like. Again, returning to step 2206, if the called participant selects answer, step 2209 causes the called participant's workstation to register its capabilities with the communications network middleware, the call bar on the called participant's screen is removed and the screen displays the real life meeting room with icons representing all the current meeting participants including the called participant being placed around the table in a realistic manner as would occur in a real life face-to-face meeting, as shown in the screen of FIG. 24.

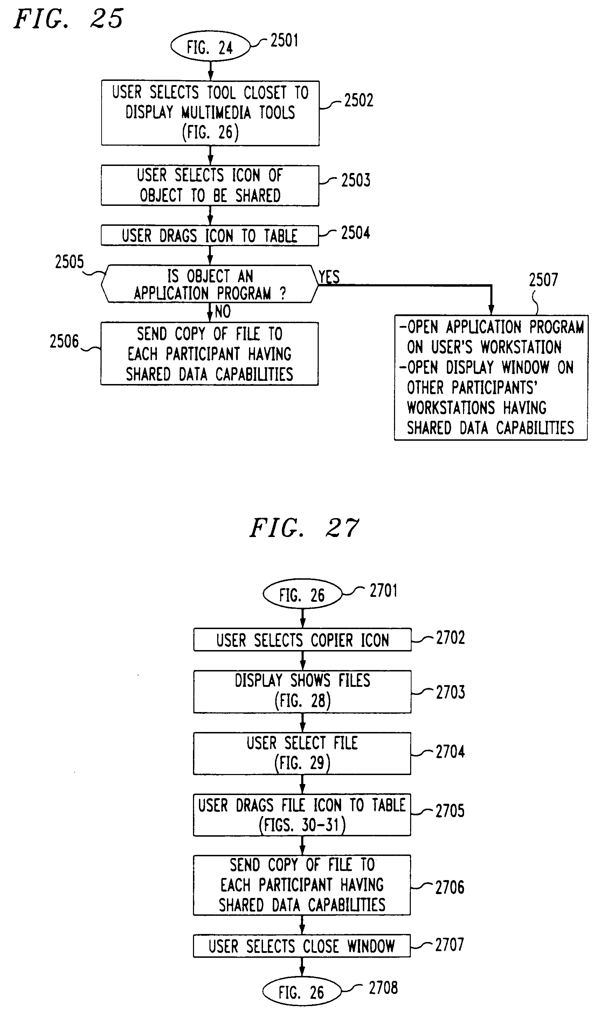

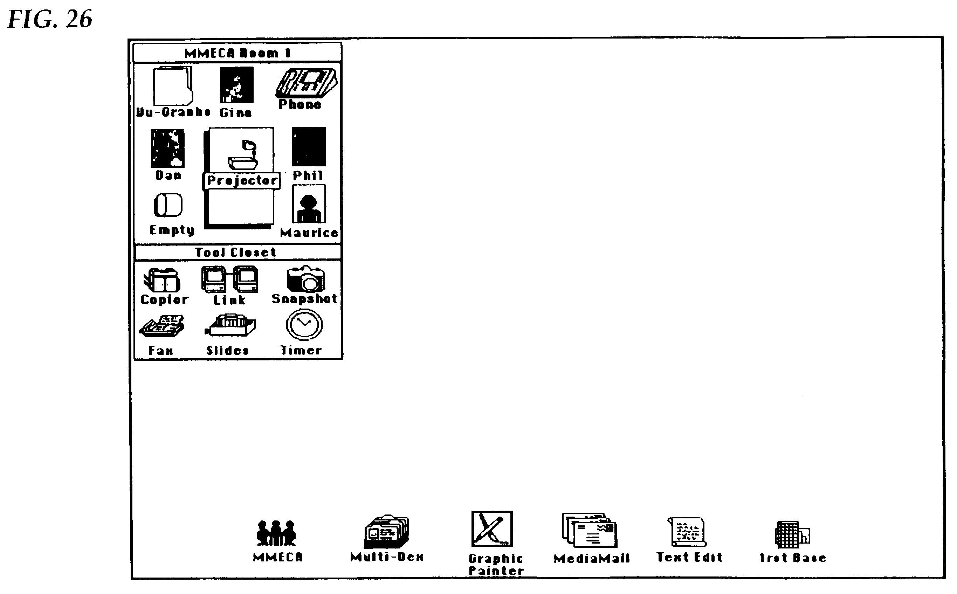

FIG. 25 is a flow chart illustrating the general steps that are taken in sharing information among all participants of the meeting. The sharing of information is initiated in step 2501 from the screen shown in FIG. 24. Then, if the user desires, he or she can select the tool closet to display multimedia tools that are available via step 2502, which causes the screen as shown in FIG. 26 to be displayed. Note that the tool closet displayed in the screen of FIG. 26 includes a plurality of multimedia tools identical to those displayed in the screen of FIG. 4, as described above. It is again noted that these are only examples of the multimedia tools that are presently available to be employed in the multimedia call and any desired number or combination of these or other multimedia tools may equally be employed. Then, in step 2503, the user selects the icon of the object to be shared. Upon selecting the icon, the user in step 2504 drags the selected icon to the table. Then, step 2505 tests to determine if the object is an application program. If the test result in step 2505 is NO, the object is a computer file and step 2506 causes the user's workstation to send a copy of the selected computer file to each participant having shared data capabilities at his or her workstation. Note that in order to receive objects placed on the table the meeting participants must have the capability to receive the data via, for example, a personal computer or computer workstation. ISDN phone 112, (FIG. 1), FAX machine 113 and phone 114 do not have such shared data capabilities. Returning to step 2505, if the test result is YES, step 2507 causes the application program to be shared to be opened, i.e., activated to be run, on the user's workstation, causes a display window to appear on the other participants' workstations, which have shared data capabilities. Then, all the participants of the meeting having the shared data capabilities can share, i.e., use, the application program as they wish. Such applications programs may include a word processor, spreadsheet, graphics package or the like.

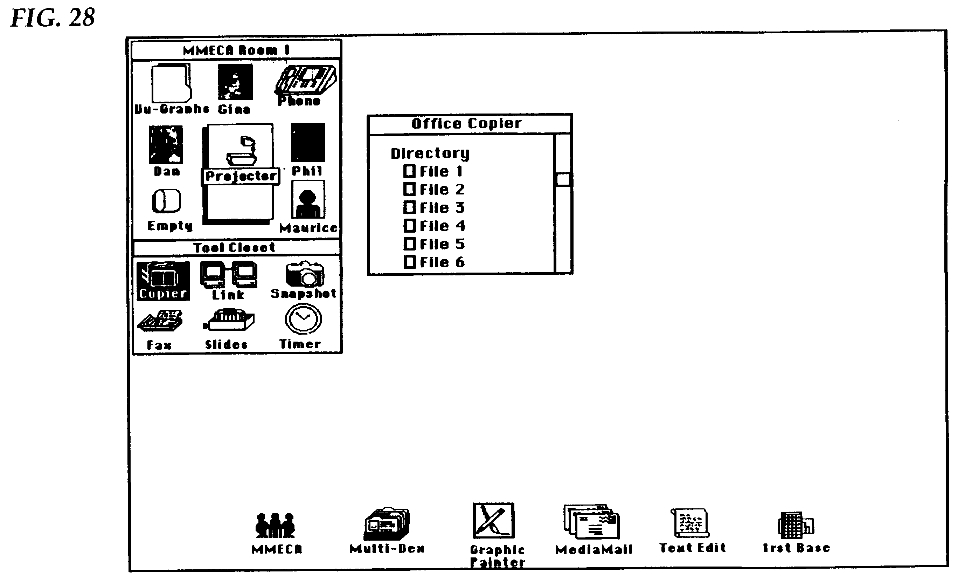

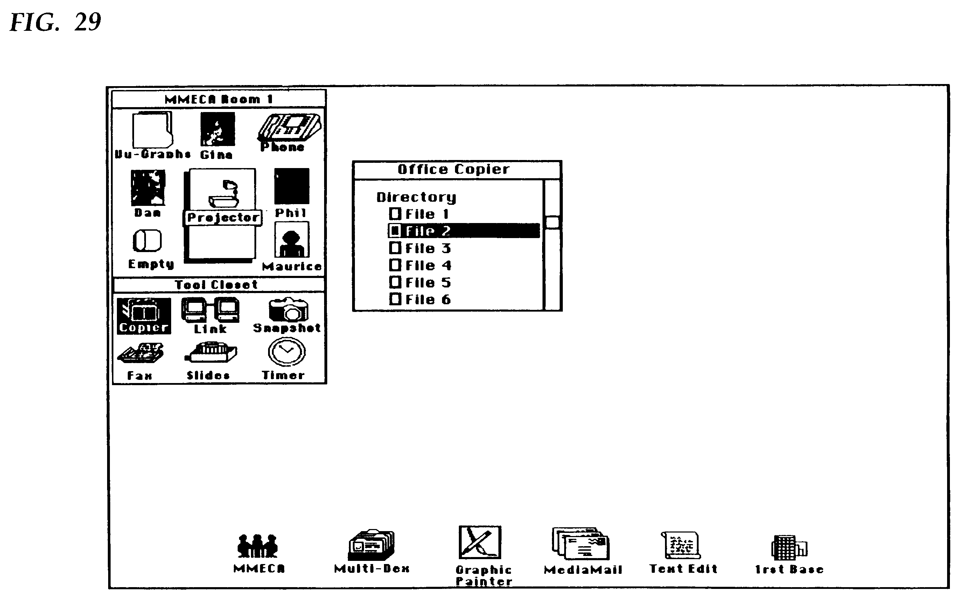

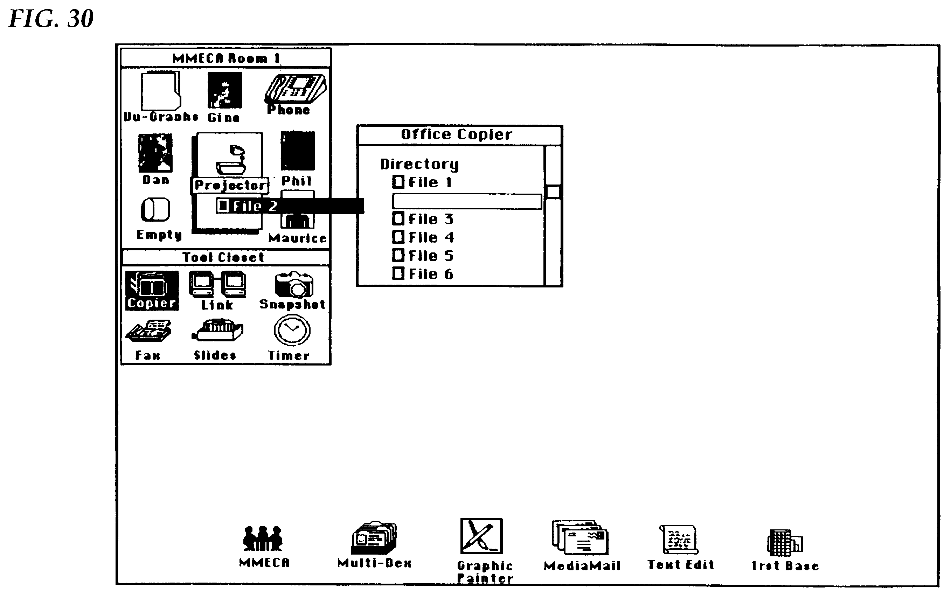

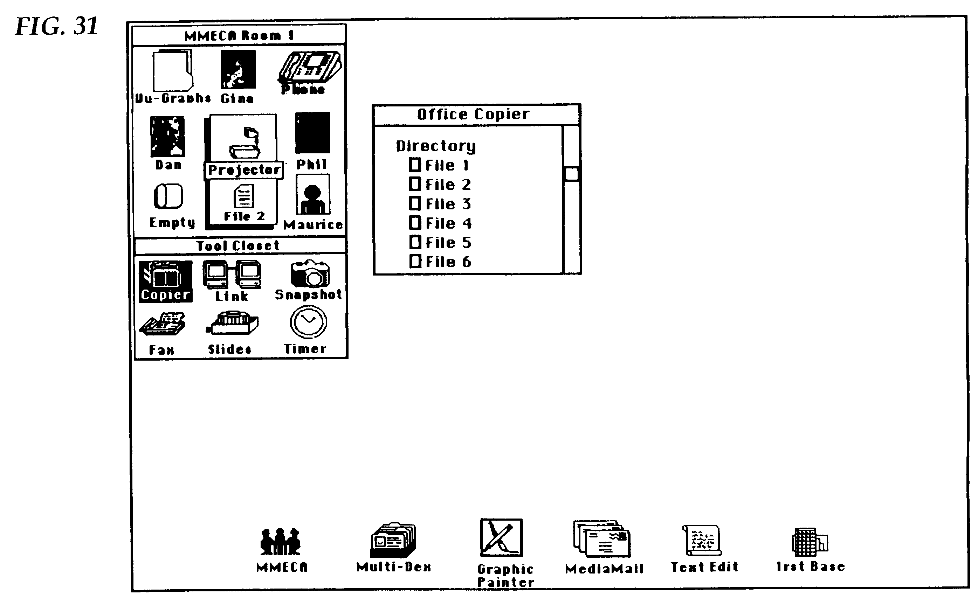

FIG. 27 is a flow chart illustrating the steps taken in sharing a computer file among all participants of the meeting having shared data capabilities. It is assumed that this process is entered via step 2701 from the screen shown in FIG. 26. Then, in step 2702, the user selects, in this example, the copier icon. Upon selection of the copier icon, step 2703 causes a window to be displayed showing a list, i.e., representations, of the available computer files, as shown on the screen of FIG. 28. Note that the format of the displayed listing of files will depend on the particular operating system employed in the participant's workstation. In step 2704, the user selects a particular computer file, which causes the screen as shown in FIG. 29 to be displayed wherein the selected file is highlighted, in this example, file number 2. Then, in step 2705, the user drags the selected file icon to the table which causes the screens in FIGs. 30-31 to be illustrated in sequence. As shown in FIG. 31, the screen displays the selected file on the table. Thereafter, step 2706 causes the computer file to be sent to each participant with shared data capabilities. Once the files are sent, the user in step 2707 closes the office copier window that contains the list of computer files and the screen, as shown in FIG. 26. is caused to be displayed via step 2708.

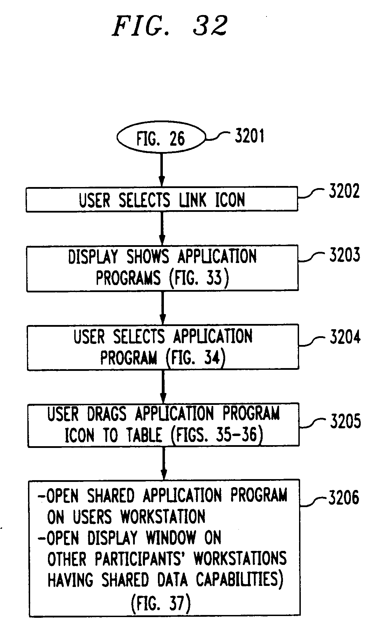

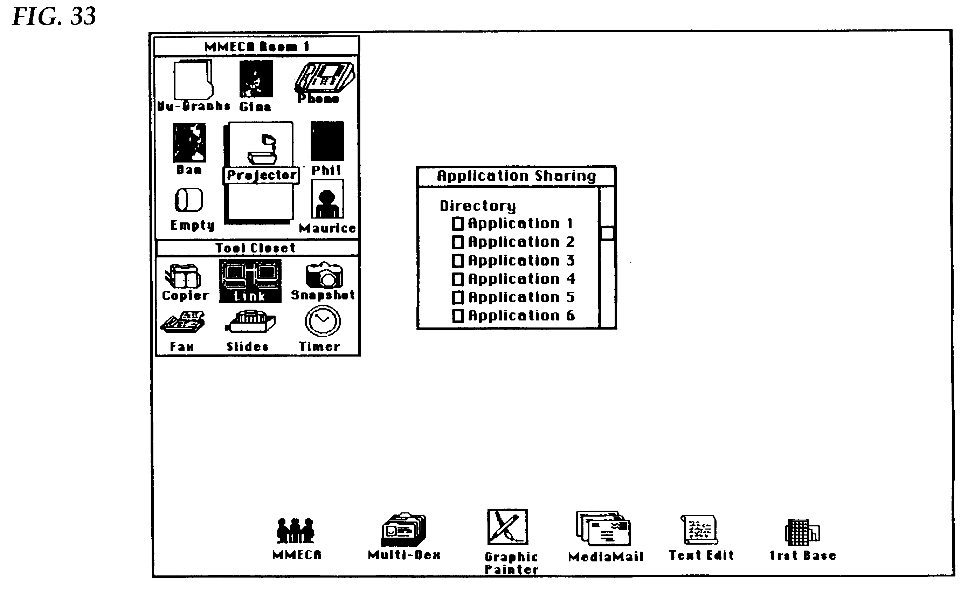

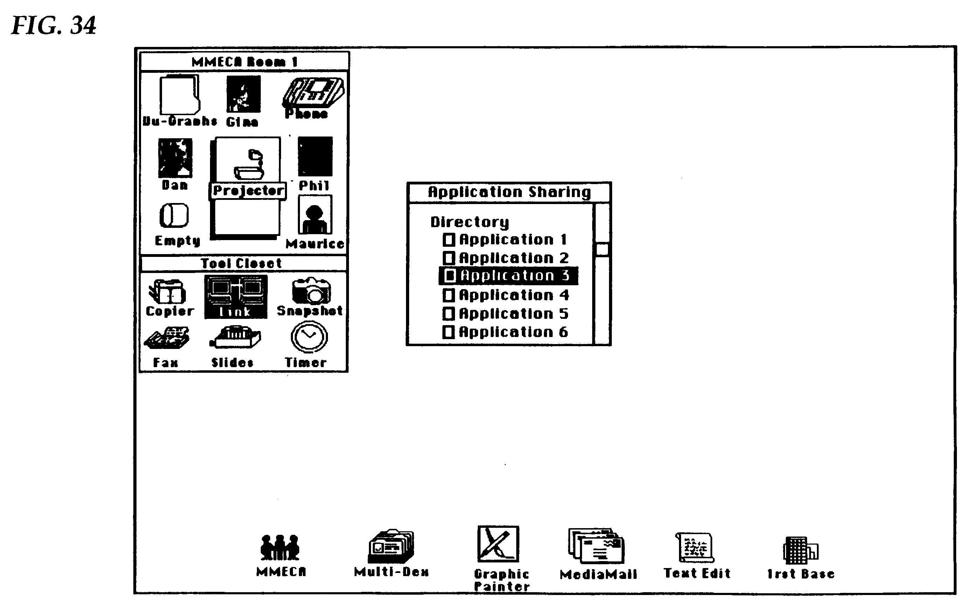

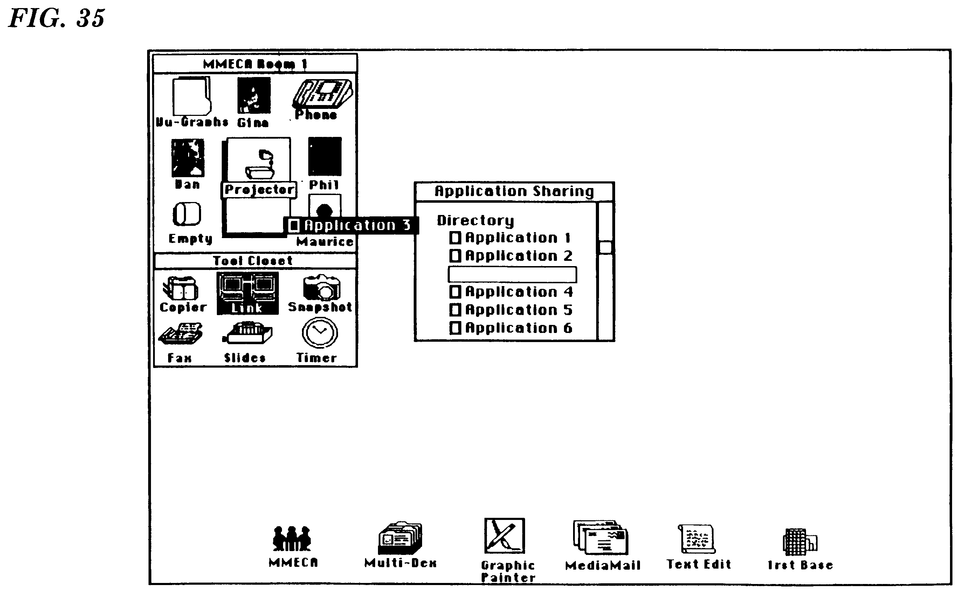

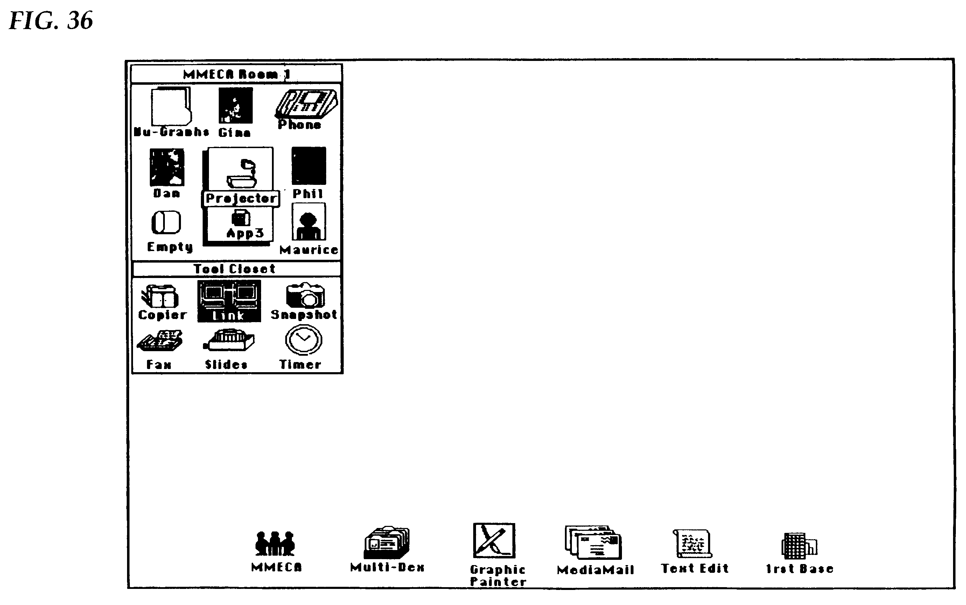

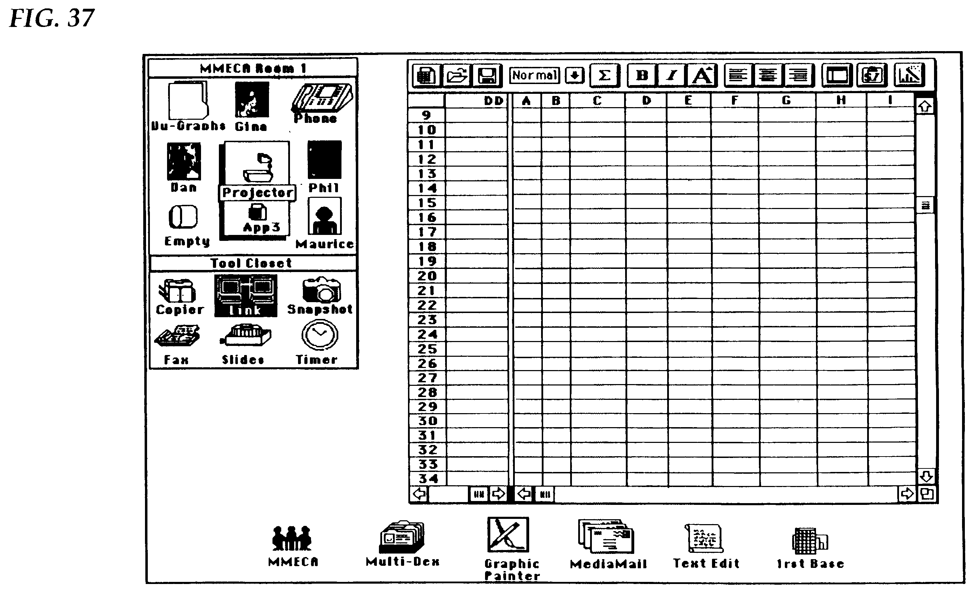

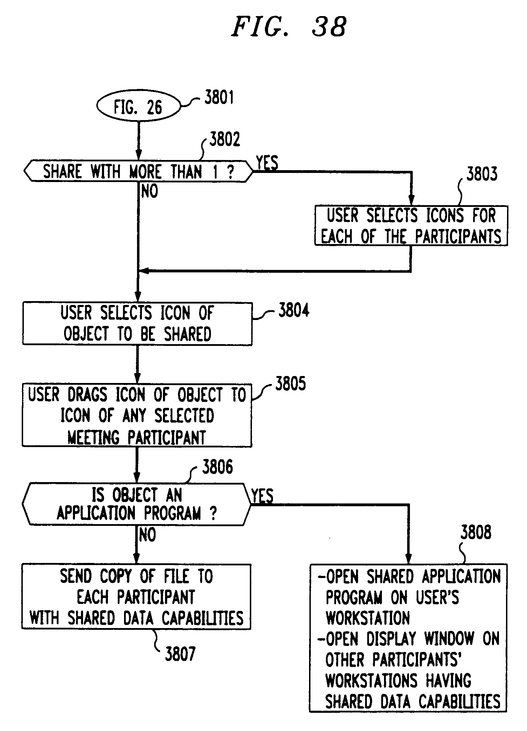

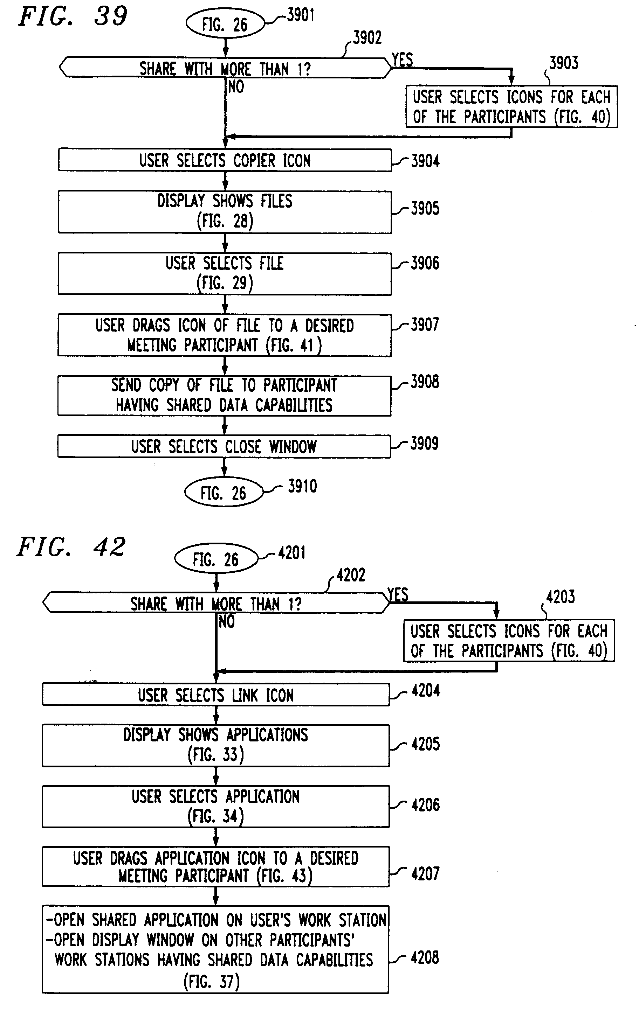

FIG. 32 is a flow chart illustrating the steps taken by a user in sharing an application program among all participants of the meeting having shared data capabilities. Again, it is assumed that this process is entered via step 3201 from the screen displayed in FIG. 26. In this example, in step 3202, the user selects the link icon from the tool closet. Upon the link icon being selected, step 3203 causes a window to be displayed showing a list, i.e., representations, of the application programs that are available for sharing, as shown in the screen of FIG. 33. Again, the format of the displayed list of application programs will depend upon the operating system being employed in the user's workstation. In step 3204, the user selects a particular application program to be shared, in this example, application 3, which causes the screen as shown in FIG. 34 to be displayed with the application 3 being highlighted in the window. Then, in step 3205, the user drags the icon of the application 3 from the application window to the table which causes the screens as shown in FIGs. 35 and 36 to be displayed in sequence. As shown in the screen of FIG. 36, application 3 has been placed on the table. Thereafter, step 3206 causes the application program to be shared to be opened on the user's workstation and causes a display window to be opened on the other participants' workstations having shared data capabilities. This also causes the screen as shown in FIG. 37 to be displayed. At this point all the meeting participants having shared data capabilities can share the application program, as desired.

FIG. 38 is a flow chart illustrating the general steps taken in a user sharing information with a selected subset of the participants of the meeting. Again, it is assumed that this process is entered via step 3801 from the screen shown in FIG. 26. Thereafter, step 3802 tests if the information is to be shared with more than one participant but fewer than all of the participants. If the test result in step 3802 is YES, the user in step 3803 selects the icons of each participant to receive the information and control is transferred to step 3804. If the test result in step 3802 is NO, control is directly transferred to step 3804 in which the user selects the icon of the object to be shared by the selected subset of participants. Then, in step 3805 the user drags the icon of the selected object to an icon of any one of the selected participants in the subset. If the information is to be shared with only one meeting participant, the object is dragged to that participant's image icon. Thereafter, step 3806 tests to determine if the selected object is an application program If the test result in step 3806 is NO, the object is a computer file and step 3807 causes the user's workstation to send a copy of the selected file to each participant in the subset having shared data capabilities at his or her workstation. If the test result in step 3806 is YES, step 3808 causes the application program to be shared to be opened on the user's workstation and causes a display window to appear on the other participants' workstations in the subset which have shared data capabilities. Then, all the participants of the subset having shared data capabilities can share the application program as they wish.

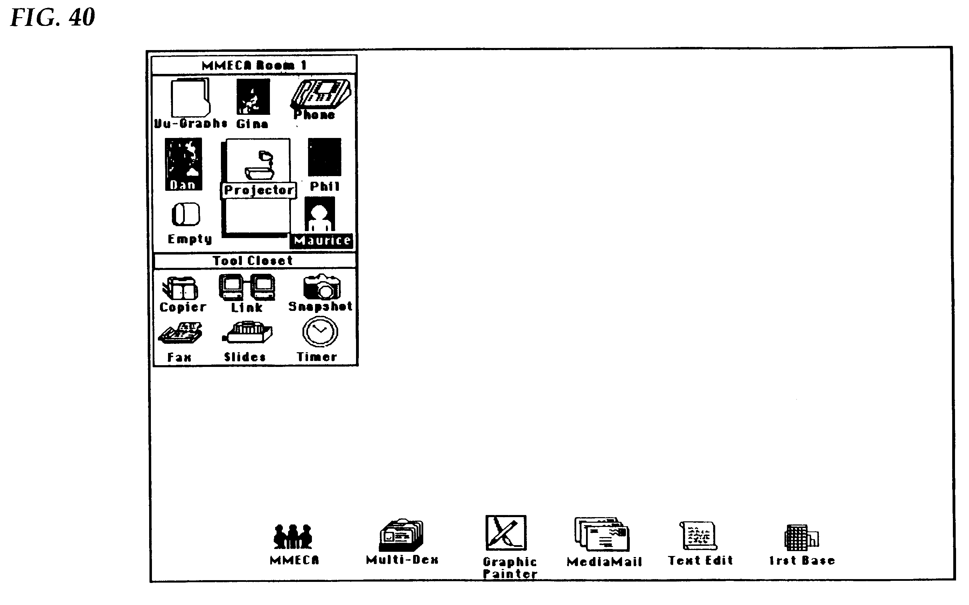

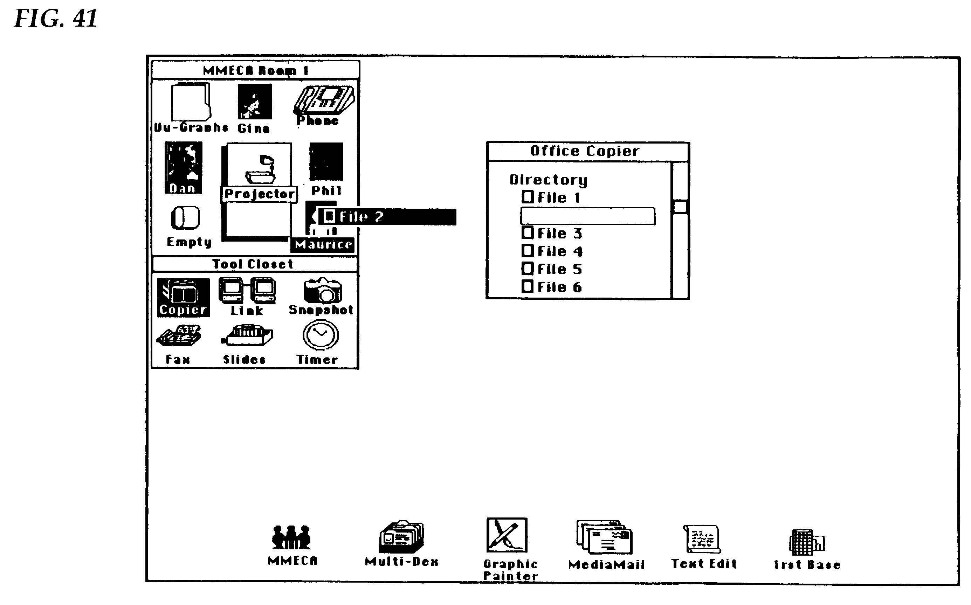

FIG. 39 is a flow chart illustrating the steps taken in sharing a computer file with a selected subset of participants of the meeting. Again, it is assumed that this process is entered via step 3901 from the screen shown in FIG. 26. Thereafter, step 3902 tests to determine if the computer file is to be shared with more than one participant but fewer than all the participants. If the test result in step 3902 is YES, the user in step 3903 selects the icons of each participant to receive the computer file, as shown in the screen of FIG. 40. In this example, the icons of Dan and Maurice have been selected and have been displayed in inverse video. Then, in step 3904 the user selects, in this example, the copier icon. Upon selection of the copier icon, step 3905 causes a window to be displayed showing the available computer files, as shown on the screen of FIG. 28. Note that the format of the displayed listing of computer files will depend on the particular operating system employed in the user's workstation. In step 3906, the user selects a particular computer file which causes the screen, as shown in FIG. 29 to be displayed, wherein the selected file is highlighted, in this example, file number 2. Then, in step 3907, the user drags the selected file icon to any one of the participants, in this example Maurice. The screen shown in FIG. 41 is displayed showing the file 2 icon over Maurice. Thereafter, step 3908 causes the computer file to be sent to each participant in the subset having shared data capabilities. Once the files are sent, in step 3909, the user closes the office copier window that contains the list of computer files. Then, the screen, as shown in FIG. 26 is caused to be displayed via step 3910. At this point only the participants in the subset having shared data capabilities can share the computer file, as desired.

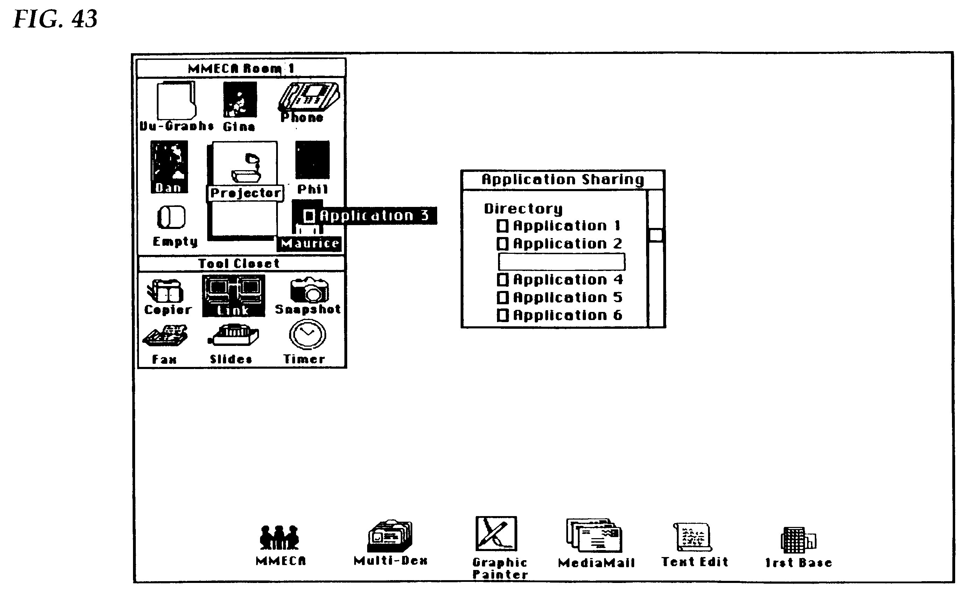

FIG. 42 is a flow chart illustrating the steps taken in sharing an application program with a selected subset of the participants of the meeting. Again, it is assumed that this process is entered via step 4201 from the screen shown in FIG. 26. Thereafter, step 4202 tests to determine if the application program is to be shared with more than one participant but fewer than all the participants. If the test result in step 4202 is YES, the user in step 4203 selects the icons of each participant to receive the application program, as shown in the screen of FIG. 40. In this example, the icons of Dan and Maurice have been selected and displayed in inverse video. Then, in step 4204 the user selects, in this example, the link icon from the tool closet. Upon the link icon being selected, step 4205 causes a window to be displayed showing a list of the application programs that are available for sharing, as illustrated in the screen of FIG. 33. Again, the format of the displayed list will depend upon the operating system being employed in the user's workstation. In step 4206, the user selects a particular application program to be shared, in this example, application 3 which causes the screen as shown in FIG. 34 to be displayed with the application 3 being highlighted in the window. Then, in step 4207 the user drags the icon of the application 3 from the application window to any one of the participants, in this example Maurice. As shown in the screen of FIG. 43, application 3 has been placed over Maurice. Thereafter, step 4208 causes the application program to be shared to be opened on the user's workstation and causes a display window to be open on the other participants' workstations having shared data capabilities. This also causes the screen as shown in FIG. 37 to be displayed. At this point only the participants in the subset having shared data capabilities can share the application program, as desired.

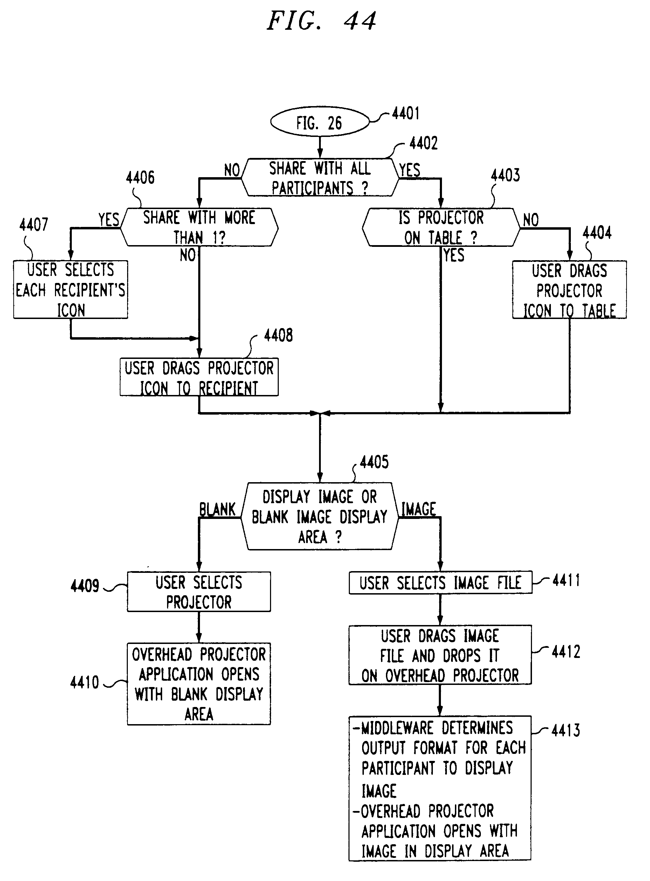

FIG. 44 is a flow chart illustrating the general steps taken in sharing an image with all participants or a subset of the participants of the meeting. Again, it is assumed that this process is entered via step 4401 from the screen of FIG. 26. Thereafter, step 4402 tests to determine if the image is to be shared with all participants of the meeting. If the test result in step 4402 is YES, step 4403 tests to determine if the overhead projector is on the table. If the test result in step 4403 is NO, the user would have to drag the projector icon from the tool closet to the table via step 4404. Thereafter, control is transferred to step 4405. If the test result in step 4403 is YES, control is directly transferred to step 4405. Returning to step 4402, if the test result is NO, the image is to be shared with a subset of the meeting participants and step 4406 tests to determine if the image is to be shared with more than one participant. If the test result in step 4406 is YES, the user in step 4407 selects the icons of each of the participants which are to share the image and control is transferred to step 4408. If the test result in step 4406 is NO, control is directly transferred to step 4408. In step 4408, the user drags the overhead projector icon to any one of the participants in the subset which are to share the image. Thereafter, control is transferred to step 4405 which tests to determine whether the projector is to display the image or a blank image display area. If the test result in step 4405 indicates blank, the user in step 4409 causes the projector to be selected. Then, step 4410 causes the overhead projector application program to be opened with the blank display area. The meeting participants can either type text, or draw images or text by hand in the display area. If the test result in step 4405 indicates that an image is to be displayed in step 4411, the user selects an image file, i.e., a view graph, and in step 4412 the user drags an image file and drops it on the overhead projector. Then, step 4413 causes the network middleware to determine the output format for each participant in order to display the image at his or her workstation and, then, causes the overhead projector application to be opened with the image in the display area. The participants may annotate this image with text and or graphics, as desired.

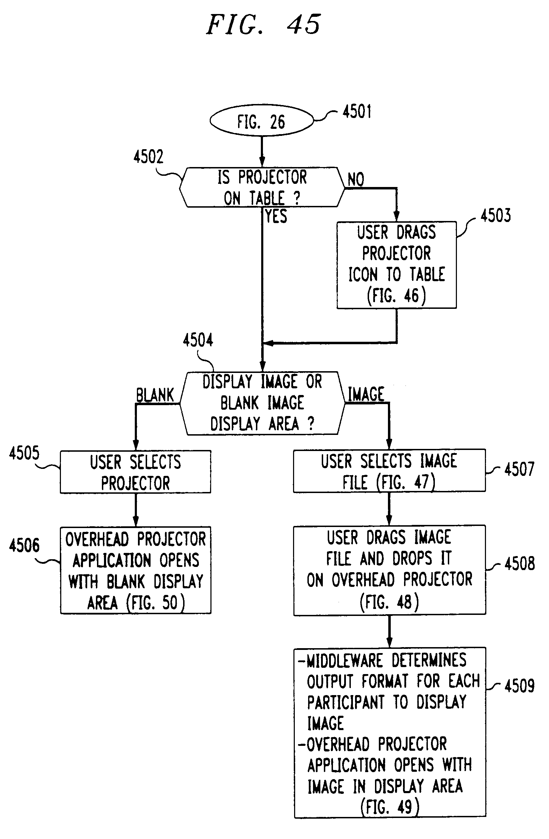

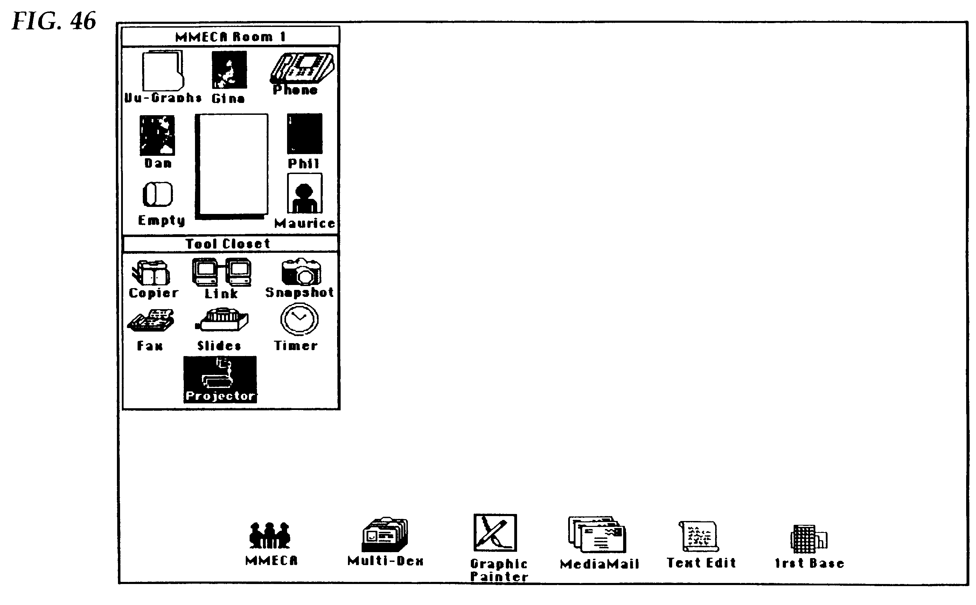

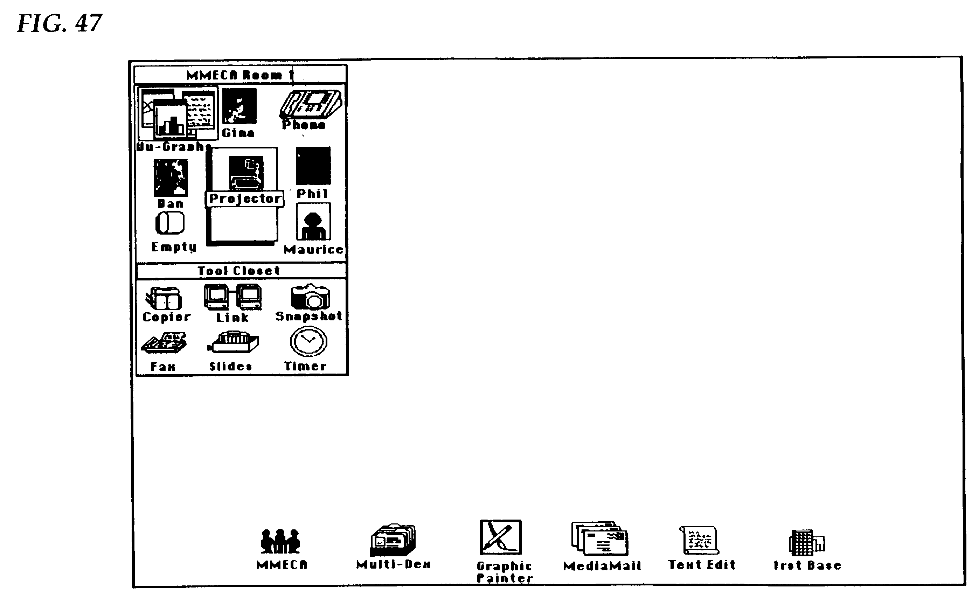

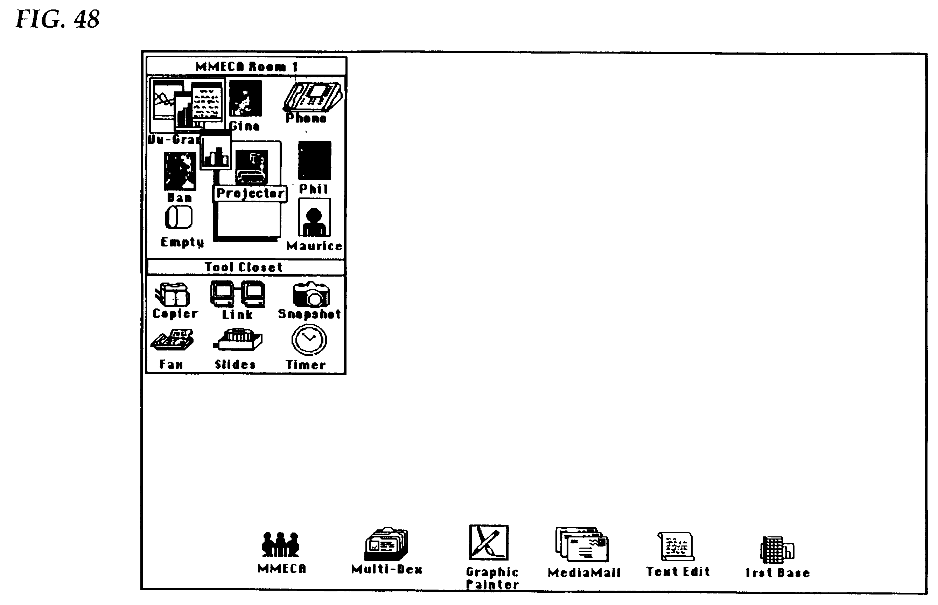

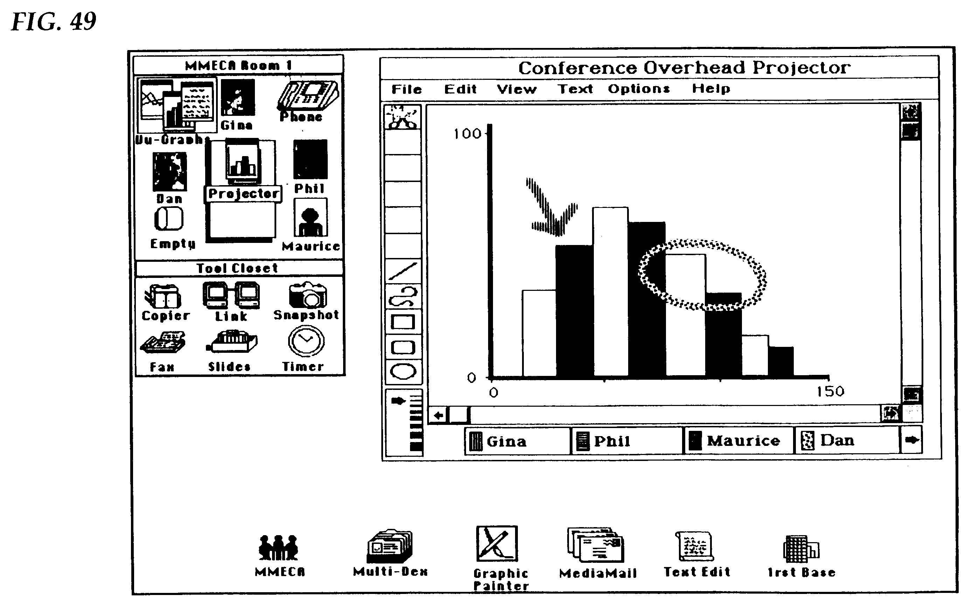

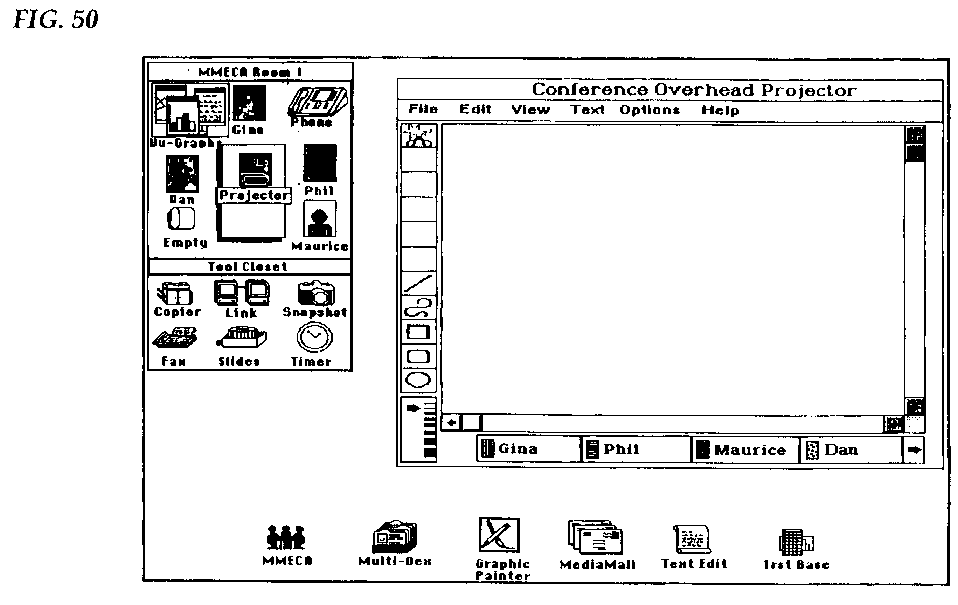

FIG. 45 is a flow chart illustrating the steps taken in sharing an image with all participants of the meeting. Again, it is assumed that this process is entered via step 4501 from the screen of FIG. 26. Thereafter, step 4502 tests to determine if the overhead projector is on the table. If the test result in step 4502 is NO, the user has to drag the projector icon from the tool closet (FIG. 46) to the table via step 4503. Thereafter, control is transferred to step 4504. If the test result in step 4502 is YES, control is directly transferred to step 4504, which tests to determine whether the projector is to display the image or a blank image display area. If the test result in step 4504 indicates blank, in step 4505, the user causes the projector to be selected. Then, step 4506 causes the overhead projector application program to be opened with the blank display area being displayed, as shown on the screen of FIG. 50. The meeting participants can either type text, or draw images or text by hand in the display area. If the test result in step 4504 indicates that an image is to be displayed, the view graph file (vu-graph) is opened displaying available view graphs, i.e., representations, of images and in step 4507, the user selects an image file, as shown in the screen of FIG. 47. Then, in step 4508, the user drags the image file and drops it on the overhead projector, as shown in the screen of FIG. 48. Then, step 4509 causes the network middleware to determine the output format for each participant in order to display the image at his or her workstation and, then, causes the overhead projector application program to be opened with the image in the display area, as shown in the screen of FIG. 49. The participants may annotate this image with text and or graphics, as desired. It is noted that if the image to be shared is placed on the virtual meeting room table a graphic image file, e.g., an image bit map, will be sent to each participant having shared data capabilities at his/her workstation and no window opens of the participants screen to display the image.

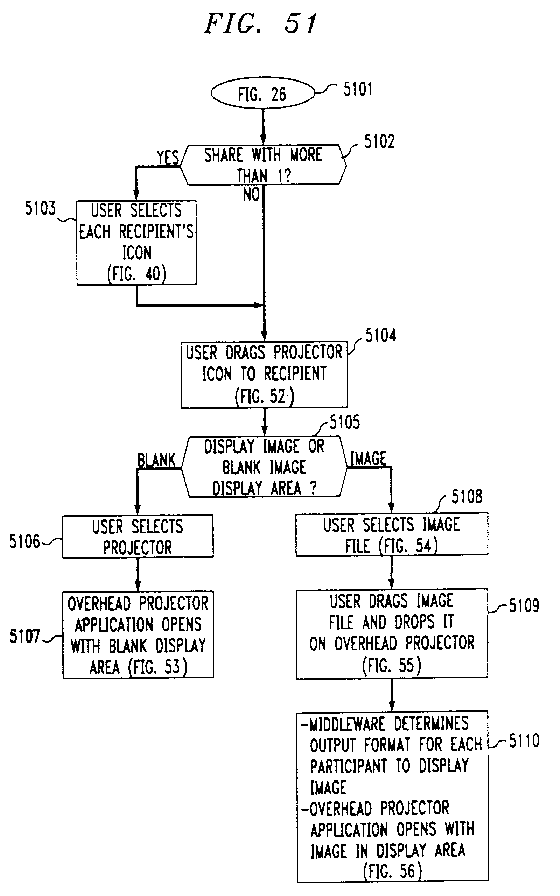

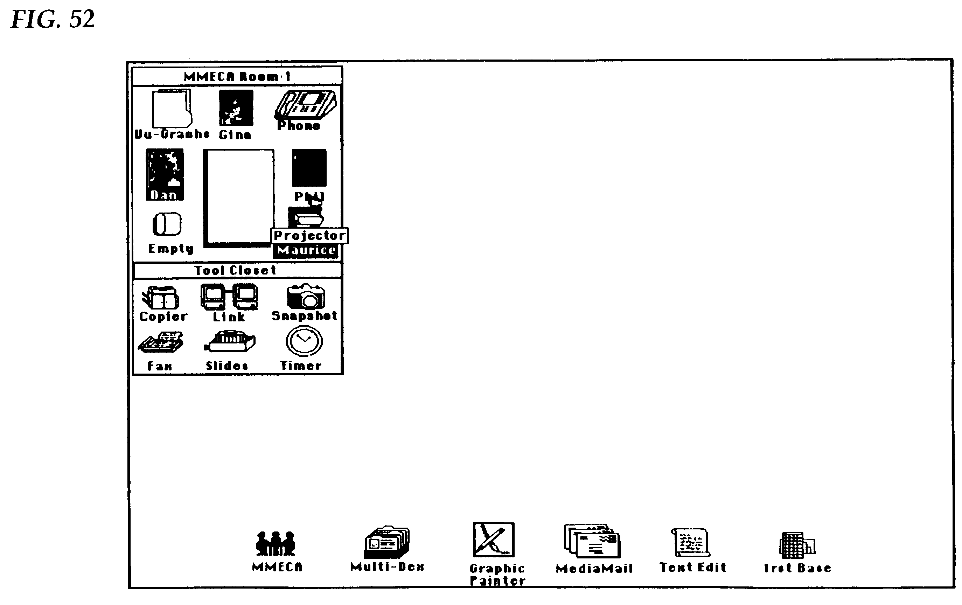

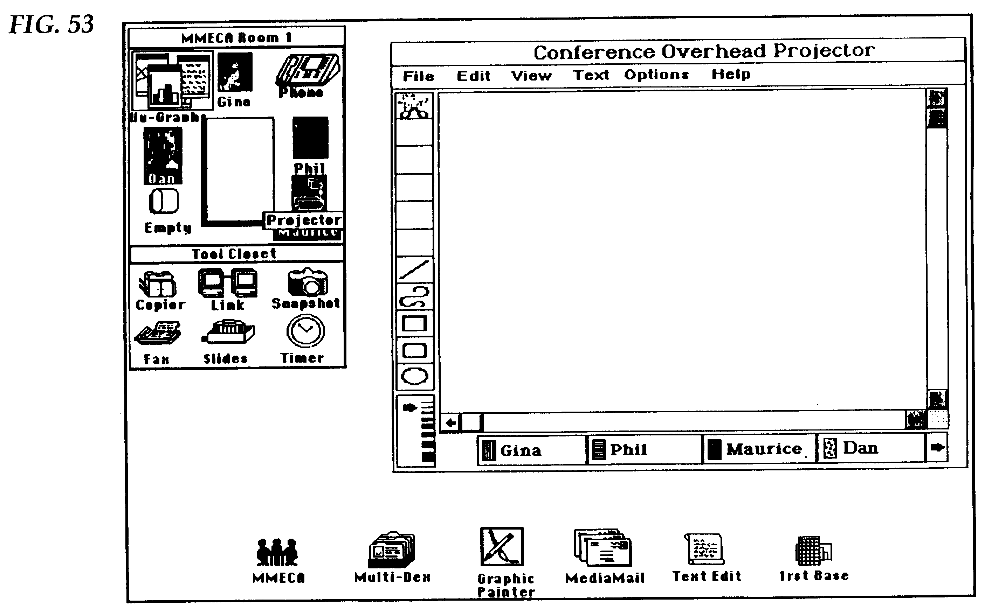

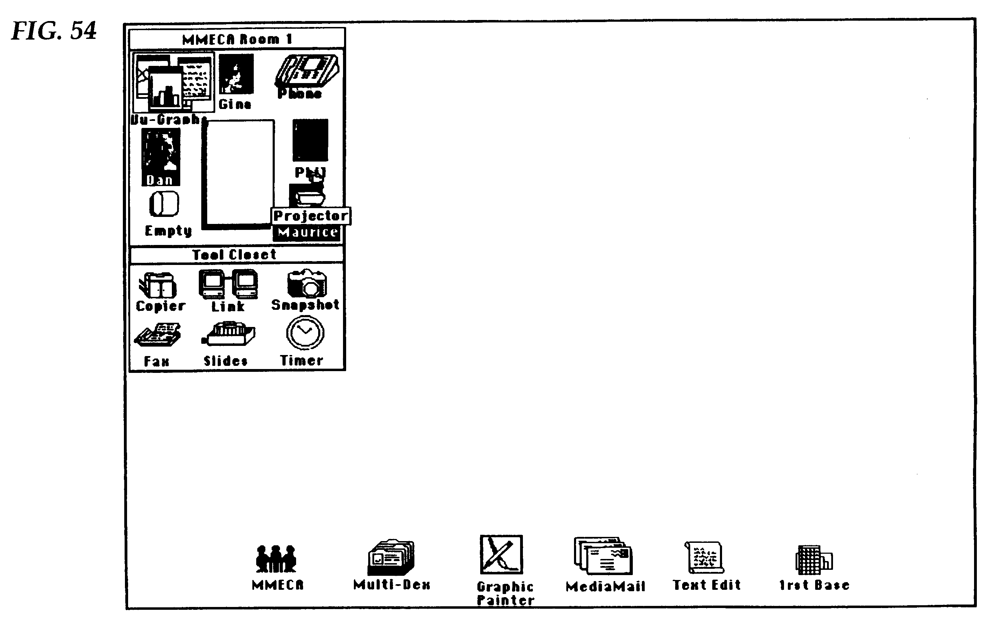

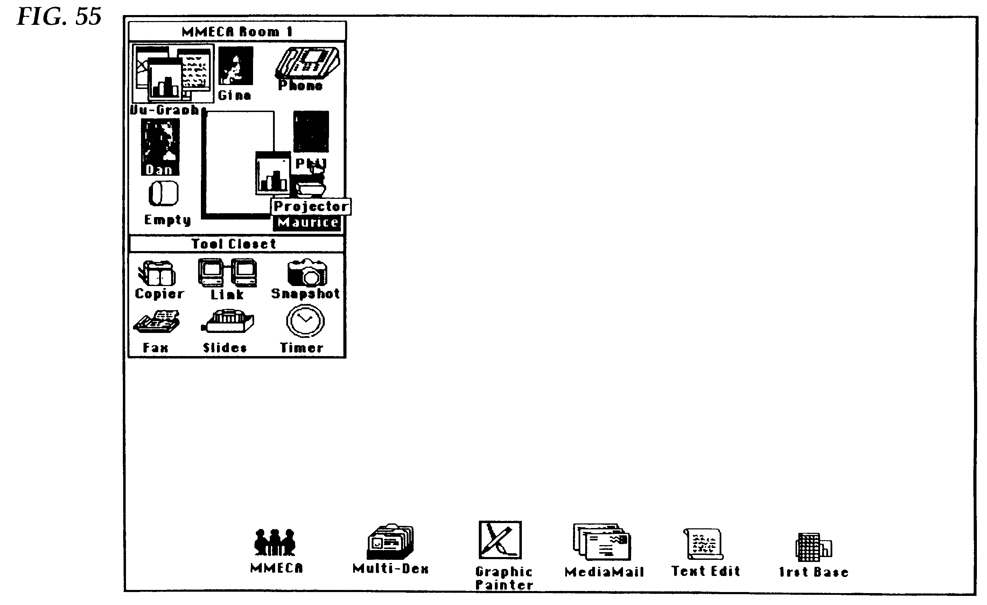

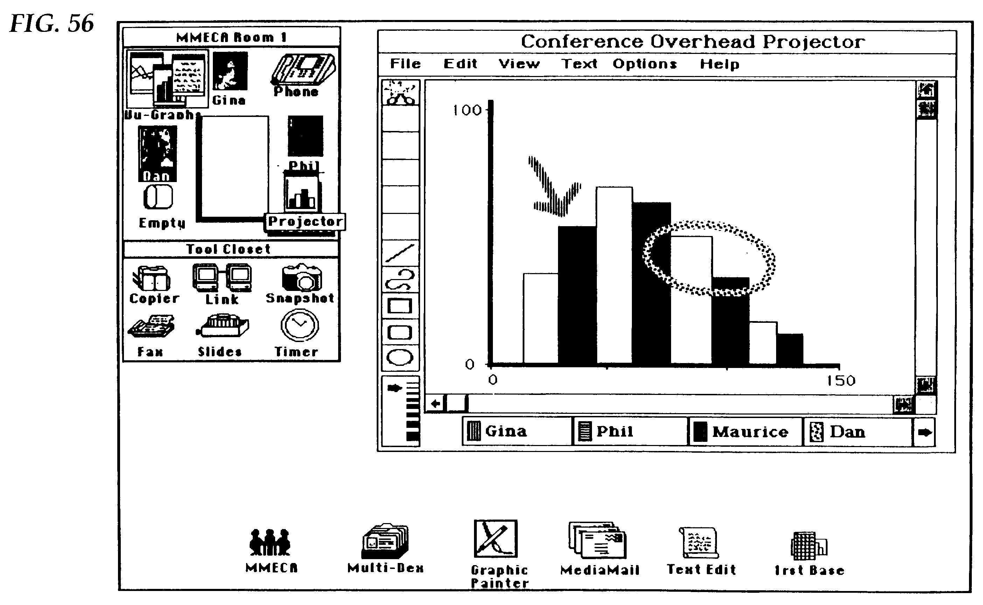

FIG. 51 is a flow chart illustrating the steps taken in sharing an image with a selected subset of the participants of the meeting. Again it is assumed that this process is entered via step 5101 from the screen of FIG. 26. Thereafter, step 5102 tests to determine if the image is to be shared with more than one participant. If the test result in step 5102 is YES, in step 5103, the user selects the icons of each of the participants which are to share the image and the screen shown in FIG. 40 is displayed. In this example, the icons for Dan and Maurice are selected and displayed in inverse video. Then, control is transferred to step 5104. If the test result in step 5102 is NO, control is directly transferred to step 5104. In step 5104, the user drags the overhead projector icon to any one of the participants in the subset which are to share the image, in this example, Maurice, as shown in the screen of FIG. 52. Thereafter, control is transferred to step 5105, which tests to determine whether the projector is to display the image or a blank image display area. If the test result in step 5105 indicates blank, in step 5106, the user causes the projector to be selected. Then, step 5107 causes the overhead projector application program to be opened with the blank display area, as shown in the screen of FIG. 53. The meeting participants in the subset can either type text, or draw images or text by hand in the display area. If the test result in step 5105 indicates that an image is to be displayed, in step 5108, the user selects the image, as shown in the screen of FIG. 54. Then, in step 5109, the user drags an image file and drops it on the overhead projector, as shown in the screen of FIG. 55. Then, step 5110 causes the network middleware to determine the output format for each participant in the subset in order to display the image at his or her workstation and, then, causes the overhead projector application program to be opened with the image in the display area, as shown in the screen of FIG. 56. The participants in the subset may annotate this image with text and/or graphics, as desired.

## Claims

1. A method for use in a user workstation having shared data capabilities and including a pointing device and a visual display unit to provide a graphical user interface for graphically depicting in a realistic manner distributing and/or sharing information with participants of a multimedia virtual meeting, comprising the steps of:
establishing a multimedia call to at least one other participant of the virtual meeting, wherein at least two of the virtual meeting participants have workstations including shared data capabilities and visual display units;
displaying in an area on a screen of the visual display unit at the user's workstation a graphical representation of a realistic virtual meeting room metaphor including realistic icons of at least a table, a representation of the user's image, representation of the at least one other participant's image, and a telephone, wherein the user's image icon and the at least one other participant's image icon are positioned around the table icon in a realistic, real life manner and the realistic telephone icon is for use in setting up the multimedia call to the at least one other prospective virtual meeting participant;
displaying a realistic icon of at least one multimedia tool to be utilized in distributing and/or sharing of information;
selecting an icon of a displayed multimedia tool;
displaying representations of information to be distributed and/or shared in response to the multimedia tool being selected;
selecting a representation of information to be distributed and/or shared; and
providing information identified by the selected representation to the at least one other participant in the virtual meeting having shared data capabilities.

2. The method as defined in claim 1 wherein the displayed virtual meeting room includes a tool closet area for storing multimedia tools to be utilized in distributing and/or sharing of the information with participants in the multimedia virtual meeting which is initially in a closed condition, and farther includes the steps of selecting the tool closet and in response to the user selecting the tool closet and displaying the multimedia tools which are in it.

3. The method as defined in claim 1 wherein the displayed at least one multimedia tool includes a realistic copier icon and wherein the step of selecting an icon includes selecting the realistic copier icon, the step of displaying representations of information displays a list of computer files available, the step of selecting a representation includes selecting a particular one of the files from the displayed list, and the step of providing includes the steps of dragging the selected file and placing it on the table icon and sending a copy of the file placed on the table icon to each virtual meeting participant having a workstation including shared data capabilities.

4. The method as defined in claim 1 wherein the displayed at least one multimedia tool includes a realistic linked computers icon and wherein the step of selecting an icon includes selecting the realistic linked computers icon, the step of displaying representations of information displays a list of application programs available, the step of selecting a representation includes selecting a particular one of the application programs from the displayed list, the step of providing includes the steps of dragging the selected application program and placing it on the table icon and opening the selected application program on the user's workstation and causing a display window to open on a screen of the display units of each of the virtual meeting participants' workstations having shared data capabilities so that they can share the selected application program.

5. The method as defined in claim 1 wherein the displayed at least on multimedia tool includes a realistic view graph folder icon and wherein the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the table icon and sending a bit map of the view graph image placed on the table icon to each virtual meeting participant having a workstation including shared data capabilities.

6. The method as defined in claim 1 wherein the displayed at least one multimedia tool includes a realistic view graph projector and a realistic view graph folder and further including the steps of determining if the projector icon is on the table icon and, if not, dragging the projector icon and placing it on the table icon, and wherein the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the projector icon, sending the view graph image to be displayed to each virtual meeting participant having a workstation including shared data capabilities and opening a projector application with the view graph image in a display area on the visual display unit screen.

7. The method as defined in claim 1 wherein the displayed at least one multimedia tool includes a realistic view graph projector icon and a realistic view graph folder icon and further including the steps of determining if the projector icon is on the table icon and, if not, dragging the projector icon and placing it on the table icon, placing it on the table icon, and determining whether an image or a blank image area is to be displayed in the image display area on the screen of the participants' workstations, if an image is to be displayed, the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the projector icon, sending the view graph image to be displayed to each virtual meeting participant having a workstation including shared data capabilities and opening a projector application with the view graph image in a display area on the visual display unit screen, and if a blank image area is to be displayed, the step of selecting includes selecting the projector icon and the step of providing includes opening a projector application with the blank image in a display area on the visual display unit screen of each participants' workstation having shared data capabilities.

8. The method as defined in claim 1 further including the steps of determining if the information is to be shared with all participants in the virtual meeting and, if not, determining if the information is to be shared with more than one participant, if so, selecting the image icons of the virtual meeting participants to receive the information and wherein the step of providing includes the step of dragging the selected representation of information to one of the selected participants and if the selected information is to be shared with only one of the meeting participants dragging the selected representation of information to that one participant.

9. The method as defined in claim 1 wherein the displayed at least one multimedia tool includes a realistic copier icon and further including the steps of determining the number of meeting participants in a subgroup which will share information, if there are more than one meeting participant in the subgroup, selecting image icons of the number of meeting participants in the subgroup, and wherein the step of selecting an icon includes selecting the realistic copier icon, the step of displaying representations of information displays a list of computer files available, the step of selecting a representation includes selecting a particular one of the files from the displayed list, and the step of providing includes the steps of dragging the selected file and placing it on the image icon of a meeting participant in the subgroup and sending a copy of the file placed on the image icon of the subgroup participant to each virtual meeting participant in the subgroup having a workstation including shared data capabilities.

10. The method as defined in claim 1 wherein the displayed at least one multimedia tool includes a realistic linked computers icon and further including the steps of determining the number of meeting participants in a subgroup which will share information, if there are more than one meeting participant in the subgroup, selecting image icons of the number of meeting participants in the subgroup, and wherein the step of selecting an icon includes selecting the realistic linked computers icon, the step of displaying representations of information displays a list of application programs available, the step of selecting a representation includes selecting a particular one of the application programs from the displayed list, the step of providing includes the steps of dragging the selected application program and placing it on the image icon of one of the meeting participants in the subgroup and opening the selected application program on the user's workstation and causing a display window to open on a screen of the display units of each of the virtual meeting participants' workstations in the subgroup having shared data capabilities so that they can share the selected application program.

11. The method as defined in claim 1 wherein the displayed at least one multimedia tool includes a realistic view graph folder icon and further including the steps of determining the number of meeting participants in a subgroup which will share information, if there are more than one meeting participant in the subgroup, selecting image icons of the number of meeting participants in the subgroup, and wherein the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the image icon of one of the meeting participants in the subgroup and sending a bit map of the view graph image placed on the image icon of the meeting participant in the subgroup to each virtual meeting participant having a workstation including shared data capabilities.

12. The method as defined in claim 1 wherein the displayed at least one multimedia tool includes a realistic view graph projector and a realistic view graph folder and further including the steps of determining the number of meeting participants in a subgroup which will share information, if there are more than one meeting participant in the subgroup, selecting image icons of the number of meeting participants in the subgroup, dragging the projector icon and placing it on the image icon of a meeting participant in the subgroup, and wherein the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the projector icon, sending the view graph image to be displayed to each virtual meeting participant in the subgroup having a workstation including shared data capabilities and opening a projector application with the view graph image in a display area on the visual display unit screen.

13. The method as defined in claim 1 wherein the displayed at least one multimedia tool includes a realistic view graph projector icon and a realistic view graph folder icon and further including the steps of determining the number of meeting participants in a subgroup which will share information, if there are more than one meeting participant in the subgroup, selecting image icons of the number of meeting participants in the subgroup, dragging the projector icon and placing it on the image icon of a meeting participant in the subgroup, and determining whether an image or a blank image area is to be displayed in the image display area on the screen of the participants' workstations in the subgroup, if an image is to be displayed, the step of selecting an icon includes selecting the realistic view graph folder icon, the step of displaying representations of information displays view graphs which are available, the step of selecting a representation includes selecting a particular one of the displayed view graphs, the step of providing includes the steps of dragging the selected view graph and placing it on the projector icon, sending the view graph image to be displayed to each virtual meeting participant in the subgroup having a workstation including shared data capabilities and opening a projector application with the view graph image in a display area on the visual display unit screen of the workstations of the meeting participants in the subgroup having shared data capabilities, and if a blank image area is to be displayed the step of selecting an icon includes selecting the projector icon and the step of providing includes opening a projector application with the blank image in a display area on the visual display unit screen of each participants' workstation in the subgroup having shared data capabilities.

14. Apparatus for use in a user workstation having shared data capabilities and including a pointing device and a visual display unit including a display screen to provide a graphical user interface for graphically depicting in a realistic manner distributing and/or sharing information with participants of a multimedia virtual meeting, comprising:
means for establishing a multimedia call to at least one other participant of the virtual meeting, wherein at least two of the virtual meeting participants have workstations including shared data capabilities and visual display units;
means for displaying in an area on the screen of the visual display unit at the user's workstation a graphical representation of a realistic virtual meeting room metaphor including realistic icons of at least a table, a representation of the user's image, a representation of the at least one other participant's image, and a telephone, wherein the user's image icon and the at least one other participant's image icon are positioned around the table icon in a realistic, real life manner and the realistic telephone icon is for use in setting up the multimedia call to the at least one other prospective virtual meeting participant;
means for displaying a realistic icon of at least one multimedia tool to be utilized in distributing and/or sharing of information;
means for selecting an icon of a displayed multimedia tool;
means for displaying representations of information to be distributed and/or shared in response to the multimedia tool being selected;
means for selecting a representation of information to be distributed and/or shared; and
means for providing information identified by the selected representation to the at least one other participant in the virtual meeting having shared data capabilities.

15. The apparatus as defined in claim 14 wherein the displayed virtual meeting room includes a tool closet area for storing multimedia tools to be utilized in distributing and/or sharing of the information with participants in the multimedia virtual meeting which is initially in a closed condition, and farther includes means for selecting the tool closet and means responsive to the user selecting the tool closet for displaying the multimedia tools which are in it.

16. The apparatus as defined in claim 14 wherein the displayed at least one multimedia tool includes a realistic copier icon and wherein means for selecting an icon includes means for selecting the realistic copier icon, the means for displaying representations of information includes means for displaying a list of computer files available, the means for selecting a representation includes means for selecting a particular one of the files from the displayed list, and the means for providing includes means for dragging the selected file and placing it on the table icon and for sending a copy of the file placed on the table icon to each virtual meeting participant having a workstation including shared data capabilities.

17. The apparatus as defined in claim 14 wherein the displayed at least one multimedia tool includes a realistic linked computers icon and wherein the means for selecting an icon includes means for selecting the realistic linked computers icon, the means for displaying representations of information includes means for displaying a list of application programs available, the means for selecting a representation includes
means for selecting a particular one of the application programs from the displayed list, the means for providing includes means for dragging the selected application program and placing it on the table icon, means for opening the selected application program on the user's workstation and means for causing a display window to open on a screen of the display units of each of the virtual meeting participants' workstations having shared data capabilities so that they can share the selected application program.

18. The apparatus as defined in claim 14 wherein the displayed at least one multimedia tool includes a realistic view graph folder icon and wherein the means for selecting an icon includes means for selecting the realistic view graph folder icon, the means for displaying representations of information includes means for displaying view graphs which are available, the means for selecting a representation includes means for selecting a particular one of the displayed view graphs, the means for providing includes means for dragging the selected view graph, means for placing it on the table icon and means for sending a graphic image file of the view graph placed on the table icon to each virtual meeting participant having a workstation including shared data capabilities.

19. The apparatus as defined in claim 14 wherein the displayed at least one multimedia tool includes a realistic view graph projector and a realistic view graph folder and further including means for determining if the projector icon is on the table icon, means for dragging the projector icon and for placing it on the table icon if it is not on the table, and wherein the means for selecting an icon includes means for selecting the realistic view graph folder icon, the means for displaying representations of information includes means for displaying view graphs which are available, the means for selecting a representation includes means for selecting a particular one of the displayed view graphs, the means for providing includes the means for dragging the selected view graph, means for placing it on the projector icon, means for sending the view graph image to be displayed to each virtual meeting participant having a workstation including shared data capabilities and means for opening a projector application with the view graph image in a display area on the visual display unit screen.

20. The apparatus as defined in claim 14 wherein the displayed at least one multimedia tool includes a realistic view graph projector icon and a realistic view graph folder icon and further including the means for determining if the projector icon is on the table icon, means for dragging the projector icon and for placing it on the table icon if it is not on the table icon, and means for determining whether an image or a blank image area is to be displayed in the image display area on the screen of the participants' workstations, the means for selecting an icon includes means for selecting the realistic view graph folder icon if an image is to be displayed, the means for displaying representations of information includes means for displaying view graphs which are available, the means for selecting a representation includes means for selecting a particular one of the displayed view graphs, the means for providing includes means for dragging the selected view graph, means for placing the selected view graph on the projector icon, means for sending the view graph image to be displayed to each virtual meeting participant having a workstation including shared data capabilities and means for opening a projector application with the view graph image in a display area on the visual display unit screen, and the means for selecting an icon includes means for selecting the to projector icon if a blank image area is to be displayed, and the means for providing further includes means for opening a projector application with the blank image in a display area on the visual display unit screen of each participants' workstation having shared data capabilities when a blank image area is to be displayed.

21. The apparatus as defined in claim 14 farther including means for determining if the information is to be shared with fewer than all participants in the virtual meeting, means for determining if the information is to be shared with more than one participant, means for selecting the image icons of the virtual meeting participants to receive the information when there is more than one meeting participant in a subgroup to share the information and wherein the means for providing includes means for dragging the selected representation of information to one of the selected participants' in the subgroup image icon and if the selected information is to be shared with only one of the meeting participants, for dragging the selected representation of information to that one participant.

22. The apparatus as defined in claim 14 wherein the displayed at least one multimedia tool includes a realistic copier icon and further including means for determining the number of meeting participants in a subgroup which is fewer than all the meeting participants that will share information, means for selecting image icons of the number of meeting participants in the subgroup if there are more than one meeting participant in the subgroup, and wherein the means for selecting an icon includes selecting the realistic copier icon, the means for displaying representations of information includes means for displaying a list of computer files available, the means for selecting a representation includes means for selecting a particular one of the files from the displayed list, and the means for providing includes means for dragging the selected file, means for placing the file on the image icon of a meeting participant in the subgroup and means for sending a copy of the file placed on the image icon of the subgroup participant to each virtual meeting participant in the subgroup having a workstation including shared data capabilities.

23. The apparatus as defined in claim 14 wherein the displayed at least one multimedia tool includes a realistic linked computers icon and further including means for determining the number of meeting participants in a subgroup which is fewer than all the meeting participants that will share information, means for selecting image icons of the number of meeting participants in the subgroup if there are more than one meeting participant in the subgroup, and wherein the means for selecting an icon includes means for selecting the realistic linked computers icon, the means for displaying representations of information includes means for displaying a list of application programs available, the means for selecting a representation includes means for selecting a particular one of the application programs from the displayed list, the means for providing includes means for dragging the selected application program, means for placing the application program on the image icon of one of the meeting participants in the subgroup, means for opening the selected application program on the user's workstation and means for causing a display window to open on a screen of the display units of each of the virtual meeting participants' workstations in the subgroup having shared data capabilities so that they can share the selected application program.

24. The apparatus as defined in claim 14 wherein the displayed at least one multimedia tool includes a realistic view graph folder icon and further including means for determining the number of meeting participants in a subgroup which is fewer than all the meeting participants that will share information, means for selecting image icons of the number of meeting participants in the subgroup if there are more than one meeting participant in the subgroup, and wherein the means for selecting an icon includes means for selecting the realistic view graph folder icon, the means for displaying representations of information includes means for displaying view graphs which are available, the means for selecting a representation includes means for selecting a particular one of the displayed view graphs, the means for providing includes means for dragging the selected view graph, means for placing the selected view graph on the image icon of one of the meeting participants in the subgroup and means for sending a graphic image file of the view graph placed on the image icon of the meeting participant in the subgroup to each virtual meeting participant having a workstation including shared data capabilities.

25. The apparatus as defined in claim 14 wherein the displayed at least one multimedia tool includes a realistic view graph projector and a realistic view graph folder and further including means for determining the number of meeting participants in a subgroup which is fewer than all the meeting participants that will share information, means for selecting image icons of the number of meeting participants in the subgroup if there are more than one meeting participant in the subgroup, means for dragging the projector icon and for placing it on the image icon of a meeting participant in the subgroup, and wherein the means for selecting an icon includes means for selecting the realistic view graph folder icon, the means for displaying representations of information includes means for displaying view graphs which are available, the means for selecting a representation includes means for selecting a particular one of the displayed view graphs, the means for providing includes means for dragging the selected view graph, means for placing it on the projector icon, means for sending the view graph image to be displayed to each virtual meeting participant in the subgroup having a workstation including shared data capabilities and means for opening a projector application with the view graph image in a display area on the visual display unit screen.

26. The apparatus as defined in claim 14 wherein the displayed at least one multimedia tool includes a realistic view graph projector icon and a realistic view graph folder icon and further including means for determining the number of meeting participants in a subgroup which is fewer than all the meeting participants that will share information, means for selecting image icons of the number of meeting participants in the subgroup if there are more than one meeting participant in the subgroup, means for dragging the projector icon and for placing it on the image icon of a meeting participant in the subgroup, and means for determining whether an image or a blank image area is to be displayed in the image display area on the screen of the participants' workstations in the subgroup, the means for selecting an icon includes means for selecting the realistic view graph folder icon, the means for displaying representations of information displays view graphs which are available when an image is to be displayed, the means for selecting a representation includes means for selecting a particular one of the displayed view graphs when an image is to be displayed, the means for providing includes means for dragging the selected view graph and for placing it on the projector icon, means for sending the view graph image to be displayed to each virtual meeting participant in the subgroup having a workstation including shared data capabilities and means for opening a projector application with the view graph image in a display area on the visual display unit screen of the workstations of the meeting participants in the subgroup having shared data capabilities, and the means for selecting an icon further includes means for selecting the projector icon when a blank image area is to be displayed, and the means for providing further includes means for opening a projector application with the blank image in a display area on the visual display unit screen of each participants' workstation in the subgroup having shared data capabilities.
